# EUROPEAN PATENT SPECIFICATION

(11) **EP 3 605 379 B1**
(45) Date of publication and mention of the grant of the patent: **19.02.2025**
(21) Application number: 18781150.0
(22) Date of filing: 07.03.2018
(51) Int. Cl.: G06F 21/62, G06F 16/00

(54) **METHOD AND DEVICE FOR PROCESSING USER INFORMATION**
VERFAHREN UND VORRICHTUNG ZUR VERARBEITUNG VON BENUTZERINFORMATIONEN
PROCÉDÉ ET DISPOSITIF DE TRAITEMENT D'INFORMATIONS D'UTILISATEUR

(30) Priority: 07.04.2017 CN 201710225812
(43) Date of publication of application: 05.02.2020
(73) Proprietor: Huawei Technologies Co., Ltd., Longgang District Shenzhen, Guangdong 518129 (CN)
(72) Inventor: OU, Duanhao, Shenzhen Guangdong 518129 (CN); LEI, Wenqing, Shenzhen Guangdong 518129 (CN)
(74) Representative: Maiwald GmbH
(86) International application number: PCT/CN2018/078348
(87) International publication number: WO 2018/184441

(56) References cited:
- WO-A1-2015/148595
- CN-A- 104 811 300
- CN-A- 105 592 032
- CN-A- 106 407 447
- US-A1- 2010 034 376
- US-A1- 2015 149 208
- US-A1- 2016 352 730

## Description

### TECHNICAL FIELD

The present invention relates to the field of big data processing, and in particular, to a user information processing method and apparatus.

### BACKGROUND

As computer technologies and network technologies develop, an enterprise and a personal user generate massive data every day, and the data is stored using a plurality of storage technologies. For example, massive user information is stored in a plurality of data nodes in a distributed manner using a distributed storage technology. However, when the stored data needs to be processed (for example, deleted, encrypted, or decrypted), the stored data needs to be retrieved in a plurality of data nodes, for example, may be retrieved by using a user identifier. Consequently, data processing efficiency is very low.

A user information processing solution provided in prior art 1 is as follows: During collection and storage of user information, an identifier of a user in the collected user information is encrypted first by using a key. The user information including ciphertext of the user identifier is stored to ensure storage security of the user identifier. When the user information needs to deleted, all user information of the user is found based on the ciphertext of the user identifier, and is deleted one by one. When the key needs to be modified, the ciphertext of the user identifier needs to be found in all nodes, the user identifier is restored by using the old key, and then the user identifier is encrypted again by using a new key. In the solution in prior art 1, storage security of a user identifier is protected, but user information needs to be retrieved and deleted in all nodes, and all old ciphertext of the user identifier needs to be refreshed in all the nodes. Due to a very large data volume in the nodes, it needs to take a large amount of time to delete the user information and update the ciphertext of the user identifier.

In prior art 2, a solution for deleting user information "everywhere" is proposed. In this solution, a key is maintained for each user, and when user information is being stored, a user identifier is encrypted first, and then ciphertext of the user identifier and user data are stored in a node. When the user makes a data deletion requirement, the key for the user is directly deleted. The key for the user is deleted, and therefore the ciphertext of the user identifier that is in the node and that is encrypted by using the key cannot be restored. However, in this solution, a large quantity of keys need to be maintained for a large quantity of users, leading to an increase in key management costs. In addition, when a key is modified, ciphertext of a user identifier needs to be retrieved in all nodes, and the ciphertext of the user identifier needs to be refreshed by using a new key. Consequently, it needs to take a large amount of system time to modify the key, affecting service availability.

Therefore, it is urgent to provide a simple, efficient, secure, and reliable user information processing solution.

Prior art document D1 (US 2015/149208) discloses a patient anonymizing system includes a plurality of hashing appliances and data sources.

Prior art document D2 (US 2016/352730) discloses data access and data anonymity management within various implementations of content distribution networks.

Prior art document D3 (2010/034376) discloses an unlinkable anonymizing method.

### SUMMARY

This application provides a user information processing method and apparatus, to provide a simple, efficient, secure, and reliable user information processing solution.

According to an aspect of this application, a user information processing method is provided, including: obtaining first user information of a user, where the first user information includes a user identifier and first user data; generating a first placeholder; storing a correspondence between the first placeholder and ciphertext of the user identifier in a user mapping table; and storing pseudonymized first user information in at least one node, where pseudonymizing the user information means replacing the user identifier in the user information with the first placeholder. In this implementation, the correspondence between the placeholder and the ciphertext of the user identifier is stored in the user mapping table, and the first user information in the node is pseudonymized, so that all subsequent operations on the first user information can be performed in the user mapping table, and there is no need to perform processing in the node, thereby implementing simpler, more efficient, securer, and more reliable processing of the user information.

In a possible implementation, when second user information is re-collected or repeatedly collected, if it is determined that the correspondence between the ciphertext of the user identifier and the first placeholder exists in the user mapping table, the first placeholder in the correspondence is obtained, and the user identifier in the second user information is replaced with the first placeholder, to obtain pseudonymized second user information. In this implementation, when the user information is repeatedly collected or re-collected, whether the correspondence including the ciphertext of the user identifier exists in the user mapping table can be determined first, and if the correspondence exists in the user mapping table, the repeatedly collected or re-collected user information may be pseudonymized and stored based on the correspondence, to ensure global uniqueness of the placeholder.

In another possible implementation, when sensitive data needs to be pseudonymized, a second placeholder is generated based on the first placeholder, a correspondence between the second placeholder and ciphertext of the sensitive data is stored in the user mapping table, and the sensitive data in the user information is replaced with the second placeholder to obtain pseudonymized user information. Specifically, the second placeholder is generated based on the first placeholder and a field attribute corresponding to the ciphertext of the sensitive data. That is, the user mapping table includes two columns used for storage. In this implementation, to pseudonymize the user identifier and the sensitive data, the two-column user mapping table is specifically used for storage. The sensitive data is also pseudonymized, so that a fine-granularity operation can be subsequently performed on the sensitive data. In addition, the two-column user mapping table facilitates extension of a field corresponding to the ciphertext of the sensitive data.

In still another possible implementation, ciphertext of the sensitive data is added to the correspondence between the first placeholder and the ciphertext of the user identifier in the user mapping table, to obtain a correspondence among the first placeholder the ciphertext of the user identifier and the ciphertext of the sensitive data, that is, the user mapping table includes a plurality of columns used for storage. In this implementation, to pseudonymize the user identifier and the sensitive data, the multi-column user mapping table is specifically used for storage. The sensitive data is also pseudonymized, so that a fine-granularity operation can be subsequently performed on the sensitive data.

In still another possible implementation, global uniqueness of the placeholder corresponding to the ciphertext of the user identifier needs to be ensured.

In still another possible implementation, during key updating, ciphertext data needs to be updated only in the user mapping table, and there is no need to perform updating in each data node, thereby dramatically improving key update efficiency.

In still another possible implementation, the correspondence between the first placeholder and the ciphertext of the user identifier in the user mapping table is destroyed, so that the user identifier cannot be restored. Therefore an effect of deleting the entire user information can be achieved without deleting the user information in each data node, thereby dramatically improving user information deletion efficiency.

In still another possible implementation, the correspondence between the second placeholder and the ciphertext of the sensitive data in the user mapping table is destroyed, so that the ciphertext of the sensitive data in the two-column user mapping table is deleted. Therefore, an effect of deleting the sensitive data is achieved, and the sensitive data is deleted at a fine granularity.

In still another possible implementation, the ciphertext of the sensitive data in the correspondence including the ciphertext of the user identifier is cleared, so that the ciphertext of the sensitive data in the multi-column user mapping table is deleted. Therefore, an effect of deleting the sensitive data is achieved, and the sensitive data is deleted at a fine granularity.

In still another possible implementation, a data center node may be authorized to actively de-pseudonymize the user information, to utilize the user information. Specifically, in a case of the two-column user mapping table, the first placeholder in the pseudonymized user information is replaced with the user identifier, and the second placeholder in the pseudonymized user information is replaced with the sensitive data. In a case of the multi-column user mapping table, the first placeholder in the pseudonymized user information is replaced with the user identifier and the sensitive data.

In still another possible implementation, a user information obtaining request from the user may be received, and the pseudonymized user information is de-pseudonymized based on the request, to facilitate user query. Specifically, in a case of the two-column user mapping table, the first placeholder in the pseudonymized user information is replaced with the user identifier, and the second placeholder in the pseudonymized user information is replaced with the sensitive data. In a case of the multi-column user mapping table, the first placeholder in the pseudonymized user information is replaced with the user identifier and the sensitive data.

According to another aspect of this application, a user information processing apparatus is provided. The user information processing apparatus has a function of implementing the actions in the foregoing method. The function may be implemented by hardware, or may be implemented by hardware executing corresponding software. The hardware or software includes one or more modules corresponding to the function.

In a possible implementation, the user information processing apparatus includes: an obtaining unit, configured to obtain first user information of a user, where the user information includes a user identifier and first user data; a generation unit, configured to generate a first placeholder; a storage unit, configured to store a correspondence between the first placeholder and ciphertext of the user identifier in a user mapping table, where the ciphertext of the user identifier is obtained by encrypting the user identifier by using a first key; and a pseudonymization unit, further configured to pseudonymize the user information to obtain pseudonymized user information, where the pseudonymizing the user information includes replacing the user identifier in the user information with the first placeholder, where the storage unit is further configured to store the pseudonymized user information in at least one node.

In another possible implementation, the user information processing apparatus includes a memory and a processor, where the memory stores a set of program code, and the processor is configured to invoke the program code stored in the memory, to perform the following operations: obtaining first user information of a user, where the user information includes a user identifier and first user data; generating a first placeholder; storing a correspondence between the first placeholder and ciphertext of the user identifier in a user mapping table, where the ciphertext of the user identifier is obtained by encrypting the user identifier by using a first key; pseudonymizing the user information to obtain pseudonymized user information, where the pseudonymizing the user information includes replacing the user identifier in the user information with the first placeholder; and storing the pseudonymized user information in at least one node.

Based on a same inventive concept, for a problem-resolving principle and beneficial effects of the user information processing apparatus, refer to the foregoing possible method implementations and beneficial effects thereof. Therefore, for implementation of the user information processing apparatus, refer to implementation of the method. No repeated description is provided.

According to still another aspect of this application, a user information processing system is provided. The system includes a terminal device, the user information processing apparatus described in the foregoing implementations, and at least one data node.

According to another aspect of this application, a computer readable storage medium is provided. The computer readable storage medium stores an instruction, and when the instruction is run on a computer, the computer is enabled to perform the method according to the foregoing aspects.

According to still another aspect of this application, a computer program product including an instruction is provided, and when the computer program product is run on a computer, the computer is enabled to perform the method according to the foregoing aspects.

### BRIEF DESCRIPTION OF DRAWINGS

To describe the technical solutions in the embodiments of the present invention or in the background more clearly, the following describes the accompanying drawings required for describing the embodiments of the present invention or the background.
FIG. 1 is a schematic diagram of a distributed storage architecture applicable to an embodiment of the present invention;
FIG. 2 is a schematic flowchart of a user information processing method according to an embodiment of the present invention;
FIG. 3 is a schematic flowchart of another user information processing method according to an embodiment of the present invention;
FIG. 4 is a schematic flowchart of still another user information processing method according to an embodiment of the present invention;
FIG. 5 is a schematic flowchart of still another user information processing method according to an embodiment of the present invention;
FIG. 6 is a schematic flowchart of still another user information processing method according to an embodiment of the present invention;
FIG. 7 is a schematic flowchart of still another user information processing method according to an embodiment of the present invention;
FIG. 8 is a schematic flowchart of still another user information processing method according to an embodiment of the present invention;
FIG. 9 is a schematic flowchart of still another user information processing method according to an embodiment of the present invention;
FIG. 10 is a schematic flowchart of still another user information processing method according to an embodiment of the present invention;
FIG. 11 is a schematic flowchart of still another user information processing method according to an embodiment of the present invention;
FIG. 12 is a schematic flowchart of still another user information processing method according to an embodiment of the present invention;
FIG. 13 is a schematic flowchart of still another user information processing method according to an embodiment of the present invention;
FIG. 14 is a schematic flowchart of still another user information processing method according to an embodiment of the present invention;
FIG. 15 is a schematic flowchart of still another user information processing method according to an embodiment of the present invention;
FIG. 16 is a schematic flowchart of still another user information processing method according to an embodiment of the present invention;
FIG. 17 is a schematic modular diagram of a user information processing apparatus according to an embodiment of the present invention; and
FIG. 18 is an architectural diagram of hardware of a user information processing device according to an embodiment of the present invention.

### DESCRIPTION OF EMBODIMENTS

The following describes the embodiments of the present invention with reference to the accompanying drawings in the embodiments of the present invention.

The following several concepts are used in many places in this application, and the concepts are explained first as follows:
Pseudonymization (Pseudonymization): To avoid identifying a data subject by using personal data, identity information included in the personal data may be replaced with a pseudonym. Such a replacement is pseudonymization. Two attributes of the pseudonymization are as follows: (1) Other attributes associated with the pseudonym are insufficient to identify the data subject associated with these attributes; and (2) A privacy-related party (for example, a data controller) other than a pseudonym allocator cannot inversely deduce the data subject based on the pseudonym with limited efforts. Pseudonymized data is still personal data.

De-pseudonymization is an inverse process of the pseudonymization.

Anonymization (Anonymization): Anonymization is a process in which personal data cannot be inversely changed. After the anonymization is performed, a data controller cannot directly or indirectly identify a data subject with efforts of the data controller or in cooperation with any third party. In addition to the two attributes of the pseudonymized data, anonymized data further has an attribute of elimination of an association between data. In an anonymization process, identity information is erased or replaced with a pseudonym, and a related function or a conversion table used to generate pseudonymized data is destroyed. In this case, the anonymized data is no longer personal data.

A placeholder is a globally unique symbol, and may be, for example, a globally unique random number or random string.

This application may be applied to a massive data processing scenario. A correspondence between an index identifier of the data and an identifier of a user is stored in a user mapping table, so that data processing efficiency can be improved. If the massive data is user information, the user may be an enterprise user or a personal user. The index identifier may be, for example, a placeholder. If security of the user identifier needs to be considered, the user identifier stored in the user mapping table needs to be encrypted. The massive data may be stored using a plurality of storage technologies, for example, a distributed storage technology.

The following embodiments are described by using big data distributed storage as an example, and massive user information is stored in a big data server in a distributed manner. However, for a user, the big data server serving as a third party is usually considered as "semi-credible" because the big data server may analyze, for profits, the user information stored in the big data server to obtain additional information, which threatens privacy security of the user. The user requires the big data server to provide a personal data deletion capability. With the data deletion function, the user may stop the big data server from using the user information of the user or delete the user information of the user in the big data server as the user expects.

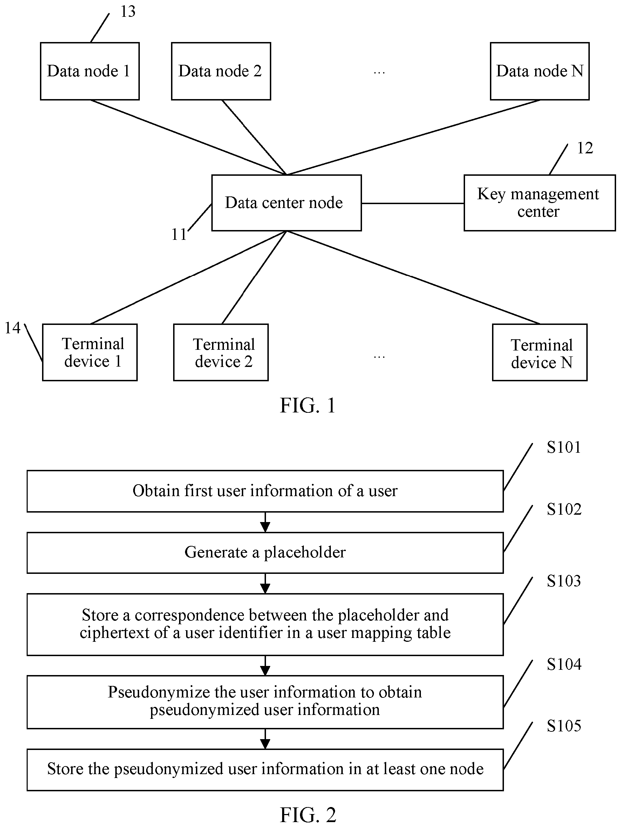

FIG. 1 is a schematic diagram of a distributed storage architecture applicable to an embodiment of the present invention. As shown in FIG. 1, a distributed storage system includes a data center node 11, a key management center 12, one or more data nodes 13 (data nodes 1 to N in FIG. 1), and one or more terminal devices 14 (terminal devices 1 to N in FIG. 1). The data center node receives a user information write request from the terminal device, repeatedly stores user information in the plurality of data nodes based on a specific replication policy and some service requirements, receives a key update request from the key management center and a user information view request and a user information deletion request from the terminal device, and the like. The user information includes a user identifier and user data, and the user data may include some sensitive data, for example, a salary and disease information of a user. The user identifier and the sensitive data need to be pseudonymized before being stored in the data nodes as sensitive information, to protect security of the sensitive information. The key management center is responsible for key generation, storage, distribution, and modification. The terminal device is mainly responsible for authorizing the data center node to collect the user information, sending the user information to the data center node, requesting to delete the user information in the data node, requesting to view the user information in the data node, and the like.

It should be noted that in the embodiments of the present invention, the key management center, the data nodes, and the data center node may be disposed on a same device. For example, the key management center may be a modular unit of the data center node. A specific manner of deploying the key management center, the data nodes, and the data center node is not limited in the present invention.

For the key storage by the key management center, the key management center may encrypt a generated key by using a root key, and store a ciphertext of the encrypted key. The root key is determined based on a plurality of key components. To protect the root key, storage of the plurality of key components needs to be particularly limited: (1) The plurality of key components are stored in the key management center in a scattered manner, to increase difficulty of obtaining all the key components and obtaining the root key by cracking the key components by an attacker; and (2) The key components need to be protected by using a rigorous access control mechanism, for example, the key components are not allowed to be accessed by an operator outside the system by using any communications interface (for example, an FTP and an MML). In terms of a function of periodically modifying a key, the key management center provides different keys in different periods, and instructs the data center node to refresh old ciphertext.

A terminal device in this application is a device having a wireless communication function, and may be a handheld device, a vehicle-mounted device, a wearable device, or a computing device that has a wireless communication function or another processing device connected to a modem, or the like. In different networks, the terminal device may have different names, for example, user equipment, an access terminal, a subscriber unit, a subscriber station, a mobile station, a mobile console, a remote station, a remote terminal, a mobile device, a user terminal, a terminal, a wireless communications device, a user agent or a user apparatus, a cellular phone, a cordless phone, a session initiation protocol (Session Initiation Protocol, SIP) phone, a wireless local loop (Wireless Local Loop, WLL) station, a personal digital assistant (Personal Digital Assistant, PDA), and a terminal device in a 5G network or a future evolved network.

The embodiments of the present invention provide a user information processing method and a data center node. A correspondence between a placeholder and ciphertext of a user identifier is stored in a user mapping table, and user information in a node is pseudonymized, so that all subsequent operations on the user information can be performed in the user mapping table, and there is no need to perform processing in the node, thereby implementing simpler, more efficient, securer, and more reliable processing of the user information.

FIG. 2 is a schematic flowchart of a user information processing method according to an embodiment of the present invention. The method may include the following steps.

S 101. Obtain first user information of a user.

A data center node may collect first user information of a terminal device or receive first user information sent by a terminal device. The first user information includes a user identifier and first user data. The user herein may be an enterprise user or a personal user. The user identifier is used to identify user data of the user. For example, user information that is shown in Table 1 as an example and that is obtained by the data center node, the user identifier may be any information such as a mobile phone number or an email address that may identify the user. In Table 1, description is provided by using the mobile phone number as the user identifier. In Table 1, user data types include age, gender, salary, disease, home address, and position. The data center node obtains the user information, and may first buffer the user information in the data center node. Certainly, in a data storage technology, data is not limited to being stored in a form of a data table.

**Table 1 User information obtained by a data center node**

| User identifier | Age | Gender | Salary | Disease | Home address | Position |
|---|---|---|---|---|---|---|
| Phone 1 | 20 | Female | 3000 | Gastrosis | Beijing | Administrative assistant |
| Phone 2 | 28 | Male | 6000 | Cervical spondylosis | Shenzhen | Research and development chief |
| ... | ... | ... | ... | ... | ... | ... |

S102. Generate a placeholder.

In this embodiment, the user information is pseudonymized using a placeholder. Therefore, the placeholder PID of the user is generated first. Specifically, a globally unique placeholder is generated for the user, to ensure different placeholders for different users. In other words, global uniqueness of the placeholder needs to be ensured. A manner of generating the placeholder for the user includes but is not limited to the manners described below:
Manner 1: The placeholder may be generated based on a specified algorithm and the user identifier. The specified algorithm includes at least one of the following: HMAC, SHA-1, and MD5.

The HMAC is used as an example:
In a specific implementation of Manner 1 is: performing an HMAC operation on the user identifier to obtain a value as the placeholder.

Another specific implementation of Manner 1 is as follows:
generating a random string RandString for a user identifier;
generating a placeholder PID, for example, PID=HMAC(randString, personal identifier), using the RandString, the user identifier, and a one-to-one mapping function. Where it should be noted that the data center node does not store the RandSTring; and
returning the PID as a placeholder of the personal identifier.

It should be noted that both of the foregoing two implementations are hash mechanisms, and can ensure uniqueness of the generated placeholder. However, if the user identifier is encrypted by using the random string and the HMAC, and the random string is deleted, an encryption result is irreversible, and in this case, a privacy requirement is better met.

Manner 2: The placeholder may be a random number or a random string. Specifically, the following steps are included:
generating a random number RN for a user identifier;
obtaining a user mapping table; and
determining whether the generated random number RN exists in the user mapping table, and if the generated random number RN exists in the user mapping table, going back to continue to generate a random number; or if the RN does not exist in the user mapping table, using the random number RN as a unique placeholder of the user identifier.

S103. Store a correspondence between the placeholder and ciphertext of the user identifier in the user mapping table, where the ciphertext of the user identifier is obtained by encrypting the user identifier by using a first key.

The data center node obtains the first key from a key management center and encrypts the user identifier, to obtain the ciphertext of the user identifier. In this embodiment, all users use a same key, and the key management center does not allocate a key to each user. The placeholder and the ciphertext of the user identifier are correspondingly stored in the user mapping table. The user mapping table stores the ciphertext of the user identifier, and therefore security of the user identifier can be ensured.

Processing of the user information in Table 1 is still used as an example, and a user mapping table shown in Table 2 is obtained, where PhoneCT 1 is obtained by encrypting a user identifier Phone 1 by using the first key, and PID 1 is a corresponding placeholder generated for the user identifier Phone 1.

**Table 2 User mapping table**

| Placeholder | Mobile phone ciphertext |
|---|---|
| PID 1 | PhoneCT 1 |
| PID 2 | PhoneCT 2 |
| ... | ... |

S104. Pseudonymize the user information to obtain pseudonymized user information, where the pseudonymizing the user information includes replacing the user identifier in the user information with the first placeholder.

Before the user information buffered in the data center node is stored in a data node, the user information needs to be pseudonymized, to improve data storage security. Specifically, the user identifier in the user information is replaced with the placeholder, to obtain the pseudonymized user information. Specifically, for example, in pseudonymized user information shown in Table 3, Phone 1 in the user information is replaced with PID 1, and Phone 2 in the user information is replaced with PID 2.

S105. Store the pseudonymized user information in at least one node.

**Table 3 Pseudonymized user information**

| User identifier | Age | Gender | Salary | Disease | Home address | Position |
|---|---|---|---|---|---|---|
| PID 1 | 20 | Female | 3000 | Gastrosis | Beijing | Administrative assistant |
| PID 2 | 28 | Male | 6000 | Cervical spondylosis | Shenzhen | Research and development chief |
| ... | ... | ... | ... | ... | ... | ... |

The pseudonymized user information in Table 3 is stored in one or more data nodes.

It should be noted that a sequence of S103 and S104 and S105 is not limited. The user mapping table may be stored first, and then the user information is pseudonymized and the pseudonymized user information is stored. Alternatively, the user information may be pseudonymized and the pseudonymized user information may be stored first, and then the user mapping table is stored. It can be learned that the user mapping table stores the correspondence between the ciphertext of the important user identifier in the user information and the placeholder. With such a uniform user mapping table, all subsequent operations (for example, deletion and key update) on the user information can be performed in the user mapping table, and there is no need to perform processing in the data node. One user mapping table is very small relative to massive user information in the data node, and therefore processing of the user information is simpler, more efficient, securer, and more reliable.

Further, the user mapping table is stored in the data center node, and the pseudonymized user information is stored in the data node. In this case, subsequent operations such as deletion of the user information, de-pseudonymization, key update, and repeated collection of the user information may be performed as required. The subsequent operations are separately described below.

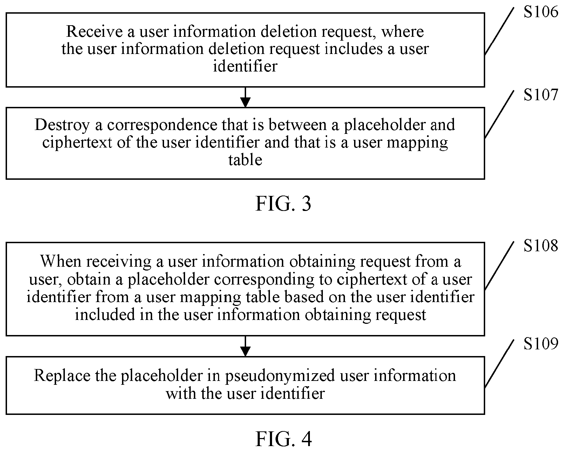

The user needs to have a right to delete the user information of the user, and a process of deleting the user information is described in this embodiment. FIG. 3 is a schematic flowchart of another user information processing method according to an embodiment of the present invention. The method may include the following steps.

S106. Receive a user information deletion request, where the user information deletion request includes the user identifier.

S107. Destroy the correspondence between the placeholder and the ciphertext of the user identifier in the user mapping table.

That is, when deleting user information of a user, the data center node only needs to destroy the correspondence between the placeholder and the ciphertext of the user identifier in the user mapping table, and does not need to delete the user information one by one in the data node. Thereby dramatically improving user information deletion efficiency. It should be noted that the destroying the correspondence includes deleting the correspondence or clearing an item in the correspondence. Certainly, any number or symbol may be filled in for an item in the correspondence.

For example, for the user mapping table in Table 2, when the data center node receives a deletion request (carrying the user identifier Phone 1) from the user, the data center node may encrypt the user identifier by using the key to obtain PhoneCT 1, then query the user mapping table using the ciphertext PhoneCT 1 of the user identifier, and determine the correspondence between the placeholder and the ciphertext of the user identifier in the user mapping table, as shown in the first row of Table 2. The destroying the correspondence between the placeholder and the ciphertext of the user identifier in the user mapping table may be specifically deleting the first row of Table 2, namely, the user mapping table, deleting PID 1 or PhoneCT 1 in the first row of Table 2, namely, the user mapping table, clearing (setting to null) PID 1 or PhoneCT 1 in the first row of Table 2, namely, the user mapping table, or the like.

After the data center node stores the pseudonymized user information in the data node, the data center node may subsequently receive a data query request from the user, that is, the user expects to view the user information of the user. Alternatively, in another scenario, as credited by the user, the data center node may actively obtain the user information from the data node and analyze the user information, to help provide a personalized server for the user. In the two cases, data needs to be restored from pseudonymized data stored in the data node (that is, a de-pseudonymization process).

In a possible implementation, FIG. 4 is a schematic flowchart of still another user information processing method according to an embodiment of the present invention. When receiving a user information obtaining request from the user, the data center node performs the following steps:
S108. When receiving a user information obtaining request from the user, obtain the placeholder corresponding to the ciphertext of the user identifier from the user mapping table based on the user identifier included in the user information obtaining request.
S109. Replace the placeholder in the pseudonymized user information with the user identifier.

De-pseudonymization is an inverse process of pseudonymization. During specific implementation, the user identifier included in the user information obtaining request is encrypted, then the placeholder corresponding to the ciphertext of the user identifier is obtained from the user mapping table, the pseudonymized user information of the user is retrieved in the data node based on the placeholder, and the placeholder is replaced with the user identifier, to restore the user information.

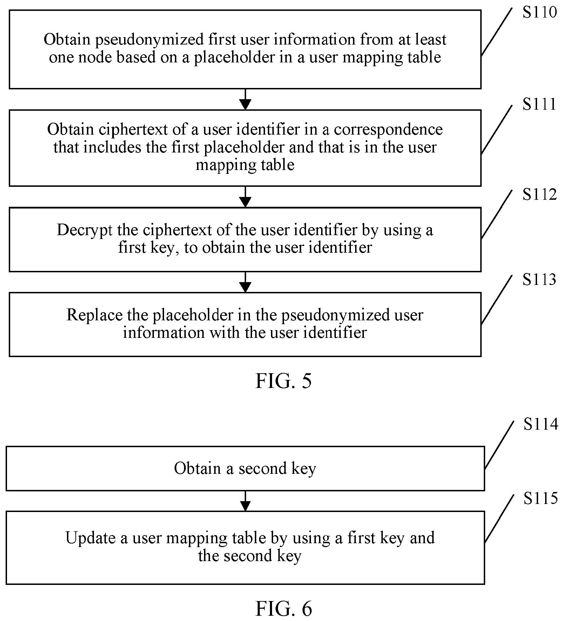

In another possible implementation, FIG. 5 is a schematic flowchart of still another user information processing method according to an embodiment of the present invention. When actively extracting the user information from the data node and analyzing the user information, the data center node performs the following steps:
S110. Obtain the pseudonymized first user information from the at least one node based on the placeholder in the user mapping table.
S111. Obtain the ciphertext of the user identifier in the correspondence between the first placeholder and the ciphertext of the user identifier in the user mapping table.
S112. Decrypt the ciphertext of the user identifier by using the first key, to obtain the user identifier.
S 113. Replace the placeholder in the pseudonymized user information with the user identifier.

A process in which the data center node actively de-pseudonymizes the user information is similar to a process in which the user requests de-pseudonymization except that the data center node directly retrieves the user information based on the placeholder in the user mapping table.

To ensure key security, the key management center may periodically update the key. Specifically, FIG. 6 is a schematic flowchart of still another user information processing method according to an embodiment of the present invention. The method includes the following steps:
S114. Obtain a second key.
S115. Update the user mapping table by using the first key and the second key.

Specifically, S115 includes the following steps:
decrypting the ciphertext of the user identifier in the user mapping table by using the first key, to obtain the user identifier;
encrypting the user identifier by using the second key, to obtain updated ciphertext of the user identifier; and
updating the ciphertext of the user identifier in the user mapping table by using the updated ciphertext of the user identifier.

During key update, the data center node only needs to update the ciphertext of the user identifier in the user mapping table, and does not need to update the ciphertext in each data node.

In a data processing process, the data center node may repeatedly collect user data of a same user. An identifier of each user corresponds to a globally unique placeholder. Therefore when repeatedly collecting the user data of the same user, the data center node does not need to generate a new placeholder.

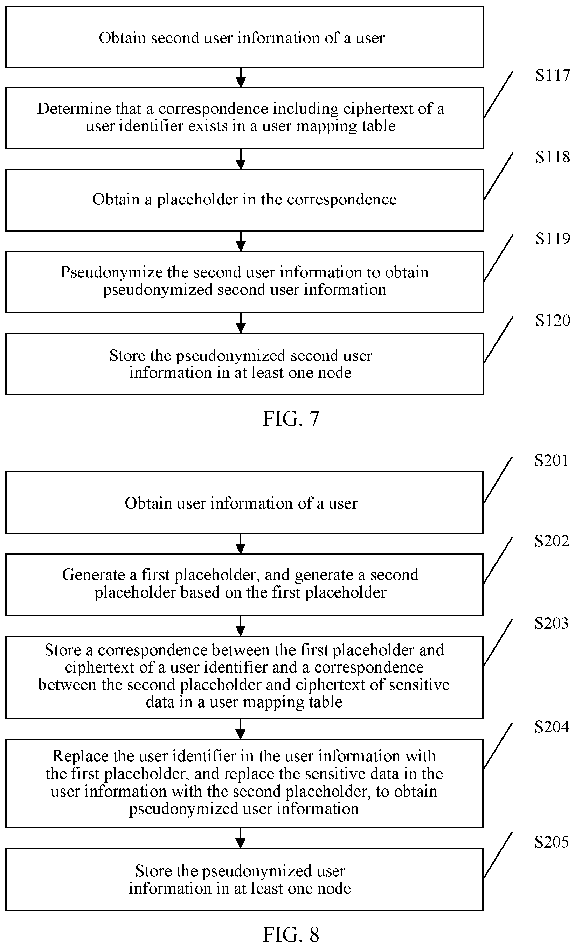

In a possible implementation, FIG. 7 is a schematic flowchart of still another user information processing method according to an embodiment of the present invention. The method includes the following steps:
S116. Obtain second user information of the user, where the second user information includes the user identifier and second user data.
S117. Determine that the correspondence including the ciphertext of the user identifier exists in the user mapping table.
S 118. Obtain the placeholder in the correspondence.
S119. Pseudonymize the second user information to obtain pseudonymized second user information.where the pseudonymizing the second user information includes replacing the user identifier in the second user information with the placeholder.
S120. Store the pseudonymized second user information in the at least one node.

It can be learned that a difference between a process of repeatedly collecting information of the user and steps S101 to S105 is that the correspondence between the ciphertext of the user identifier and the placeholder exists in the user mapping table, the correspondence may be directly obtained, and the user information is pseudonymized by using the placeholder in the correspondence.

According to the user information processing method provided in this embodiment of the present invention, the correspondence between the placeholder and the ciphertext of the user identifier is stored in the user mapping table, and the user information in the node is pseudonymized, so that all subsequent operations on the user information can be performed in the user mapping table, and there is no need to perform processing in the node, thereby implementing simpler, more efficient, securer, and more reliable processing of the user information.

It should be noted that in this embodiment of the present invention, the user identifier stored in the user mapping table is encrypted for the sake of security. A person skilled in the art should understand that when there is no need to consider security, step 103 may be changed to the following: Store a correspondence between the placeholder and the user identifier in the user mapping table. In this case, step 107 is correspondingly changed to the following: Destroy the correspondence between the placeholder and the user identifier in the user mapping table, and step 108 is correspondingly changed to the following: When receiving a user information obtaining request from the user, obtain the placeholder corresponding to the user identifier from the user mapping table based on the user identifier included in the user information obtaining request. In the following embodiments of this application, description is provided by using an example in which the user identifier needs to be encrypted.

In the foregoing embodiment, the user identifier is pseudonymized, so that the user information becomes the pseudonymized user information, to protect security of the user information. In addition, deletion of the user information, key update, and de-pseudonymization are further described after the user identifier is replaced with the placeholder. However, in this embodiment, sensitive data cannot be deleted and de-pseudonymized at a fine granularity. In the following embodiments, fine-granularity processing of the sensitive data is described.

Specifically, a user mapping table may include two columns or a plurality of columns used for storage. In a case of two columns used for storage, one column of a placeholder and one column corresponding to ciphertext of sensitive information are included. In a case of a plurality of columns used for storage, one column of a placeholder and a plurality of columns corresponding to ciphertext of sensitive information are included. The following describes operations of storage, user information deletion, de-pseudonymization, and key update separately by using the two types of user mapping tables.

In the following embodiments in FIG. 8 to FIG. 12, a case in which a user mapping table includes two columns used for storage is described.

FIG. 8 is a schematic flowchart of another user information processing method according to an embodiment of the present invention. The method may include the following steps.

5201. Obtain user information of a user.

This step is the same as step S101 in the embodiment shown in FIG. 2, and therefore details are not described herein again. A difference is that the user information includes a user identifier and user data, and the user data may further include sensitive data and non-sensitive data. For example, in user information in Table 1 that is obtained by a data center node, salary and disease are sensitive data, and home address and position are non-sensitive data. The user identifier and the sensitive data may be collectively referred to as sensitive information, and if the sensitive information of the user is stored in a data node in a form of plaintext, the user information may be under a security risk.

S202. Generate a first placeholder, and generate a second placeholder based on the first placeholder.

A process of generating the first placeholder is the same as step S102 in the embodiment shown in FIG. 2, and therefore details are not described herein again.

Further, the second placeholder needs to be generated based on the first placeholder. Specifically, the generating the second placeholder based on the first placeholder includes: generating the second placeholder based on the first placeholder and a field attribute corresponding to ciphertext of the sensitive data. The field attribute may be a field name or a transformation of a field name. The transformation of the field name is obtained by encrypting the field name or performing one-to-one mapping encoding on the field name. The user information in Table 1 is used as an example. In this table, salary and disease of a user are sensitive data. If the first placeholder is PID, and a field name (salary) corresponding to ciphertext of a salary "3000" of a user 1 is encoded as 1, the second placeholder may be PID_1, if a field name corresponding to ciphertext of a disease "gastrosis" of the user 1 is encoded as 2, the second placeholder may be PID_2, and so on. It should be noted that the second placeholders herein mean that manners of generating the second placeholders are the same, and do not mean quantities of placeholders.

S203. Store a correspondence between the first placeholder and ciphertext of the user identifier and a correspondence between the second placeholder and ciphertext of the sensitive data in two-column user mapping table, where the ciphertext of the user identifier is obtained by encrypting the user identifier by using a first key, and the ciphertext of the sensitive data is obtained by encrypting the sensitive data by using the first key.

Specifically, in this embodiment, the correspondence among the placeholder the ciphertext of the user identifier and the ciphertext of the sensitive data is represented in a form of a two-column user mapping table. For example, a user mapping table generated based on the user information in Table 1 is shown in Table 4:

**Table 4 Two-column user mapping table**

| Placeholder | Ciphertext of sensitive information |
|---|---|
| PID 1 | PhoneCT 1 |
| PID 1_1 | SalaryCT 1 |
| PID 1_2 | DiseaseCT 1 |
| PID 2 | PhoneCT 2 |
| PID 2_1 | SalaryCT 2 |
| PID 2_2 | DiseaseCT 2 |
| ... | ... |

It should be noted that when the user information includes a plurality of user identifiers, one of the user identifiers may be selected as an identifier as required, and the other user identifiers are stored as the sensitive data.

S204. Replace the user identifier in the user information with the first placeholder, and replace the sensitive data in the user information with the second placeholder, to obtain pseudonymized user information.

When the user information is to be stored in the data node, the user information needs to be pseudonymized, to protect data security. Specifically, the user identifier in the user information is replaced with the first placeholder, and the sensitive data in the user information is replaced with the second placeholder, to obtain the pseudonymized user information. The user information in Table 1 that is shown as an example above is still used as an example. User information obtained by pseudonymizing the user information is shown in Table 5:

**Table 5 Pseudonymized user information**

| User identifier | Age | Gender | Salary | Disease | Home address | Position |
|---|---|---|---|---|---|---|
| PID 1 | 20 | Female | PID 11 | PID 1₋2 | Beijing | Administrative assistant |
| PID 2 | 28 | Male | PID 2_1 | PID 2_2 | Shenzhen | Research and development chief |
| ... | ... | | ... | ... | ... | ... |

It can be learned that the user identifier is replaced with the first placeholder and the first placeholder is stored in the data node, and user information, namely, salary and disease, for which special security protection is required is also replaced with a corresponding placeholder that is stored in the data node. In this case, even if an unauthorized user obtains the user information, the user cannot identify a specific user to which the user information belongs if the key and the user mapping table are not obtained. Therefore, the user information cannot be further processed.

S205. Store the pseudonymized user information in at least one node.

The pseudonymized user information in Table 5 is stored in one or more data nodes.

Further, the user mapping table is stored in the data center node, and the pseudonymized user information is stored in the data node. In this case, subsequent operations such as deletion of the user information, de-pseudonymization, and key update may be performed as required. The subsequent operations are separately described below.

The user needs to have a right to delete the user information of the user, and deleting the user information includes deleting the entire user information and deleting some sensitive data at a fine granularity. That is, if the user does not expect to delete all the user information of the user, but requires deletion only of a specific piece of sensitive data of the user, for example, a salary and/or a disease, only the sensitive data may be deleted at a fine granularity. The following describes a process of deleting the user information.

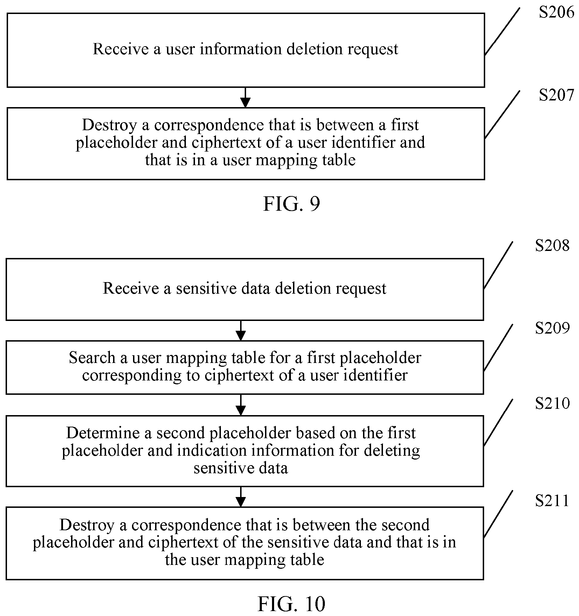

In a possible implementation, the entire user information needs to be deleted. FIG. 9 is a schematic flowchart of still another user information processing method according to an embodiment of the present invention. The method may include the following steps:
S206. Receive a user information deletion request, where the user information deletion request includes the user identifier.
S207. Destroy the correspondence between the first placeholder and the ciphertext of the user identifier in the user mapping table.
Step 207 is the same as step 107, and therefore details are not described herein again. In another possible implementation, the sensitive data is deleted at a fine granularity. FIG. 10 is a schematic flowchart of still another user information processing method according to an embodiment of the present invention. The method may include the following steps:
   S208. Receive a sensitive data deletion request, where the sensitive data deletion request includes the user identifier and indication information for deleting the sensitive data.

The indication information for deleting the sensitive data may be, for example, a field corresponding to the sensitive data. For example, the sensitive data deletion request includes a user identifier Phone 1 and a field, namely, salary.

S209. Search the user mapping table for the first placeholder corresponding to the ciphertext of the user identifier.

S210. Determine the second placeholder based on the first placeholder and the indication information for deleting the sensitive data.

For example, the sensitive data deletion request in step 208 includes the user identifier Phone 1 and the field, namely, salary. Therefore it can be learned, based on the generation method of the second placeholder in step 202, that the second placeholder is PID_1.

S211. Destroy the correspondence between the second placeholder and the ciphertext of the sensitive data in the user mapping table.

Specifically, the data center node receives the sensitive data deletion request from the user. The sensitive data deletion request includes the user identifier and the indication information for deleting the sensitive data, and the indication information for deleting the sensitive data is used to indicate the field attribute corresponding to the ciphertext of the to-be-deleted sensitive data. The data center node encrypts the user identifier by using the key, to obtain the ciphertext of the user identifier, then searches the user mapping table for the first placeholder corresponding to the ciphertext of the user identifier. The data center node obtains the second placeholder corresponding to the sensitive data based on the first placeholder and the field attribute corresponding to the ciphertext of the sensitive data, and deletes the correspondence between the second placeholder and the ciphertext of the sensitive data in the user mapping table. The correspondence between the second placeholder and the ciphertext of the sensitive data is deleted, so that the ciphertext of the sensitive data cannot be found based on the second placeholder in the data node, and the sensitive data cannot be obtained through decryption, thereby achieving an objective of deleting the sensitive data.

For example, the sensitive data deletion request is received, and the request carries the mobile phone number Phone 1 and an indication for deleting salary data. In this case, Phone 1 is encrypted to obtain PhoneCT 1, the first placeholder PID 1 corresponding to PhoneCT 1 is found in the user mapping table shown in Table 4, it can be learned, based on a database field number 1 corresponding to salary ciphertext, that the second placeholder is PID 1_1, and a correspondence between PID 1_1 and SalaryCT 1 is deleted, and an obtained user mapping table in which the sensitive data is deleted is shown in Table 6:

**Table 6 User mapping table in which a specific piece of sensitive data is deleted**

| Placeholder | Ciphertext of sensitive information |
|---|---|
| PID 1 | PhoneCT 1 |
| PID 1_2 | DiseaseCT 1 |
| PID 2 | PhoneCT 2 |
| PID 2 _1 | SalaryCT 2 |
| PID 2_2 | DiseaseCT 2 |
| ... | ... |

It should be noted that the destroying the correspondence between the first placeholder and the ciphertext of the user identifier in the user mapping table or the destroying the correspondence between the second placeholder and the ciphertext of the sensitive data in the user mapping table includes deleting the correspondence or clearing an item in the correspondence. For example, during deletion of the sensitive data, the ciphertext of the sensitive information may be cleared, or the second placeholder corresponding to the ciphertext of the sensitive information is cleared. Certainly, a specific value or symbol may be filled in for an item in the correspondence.

After the data center node stores the pseudonymized user information in the data node, the data center node may subsequently receive a data query request from the user, that is, the user expects to view the user information of the user. Alternatively, in another scenario, as credited by the user, the data center node may actively extract the user information from the data node and analyze the user information, to help provide a personalized server for the user. In the two cases, data needs to be restored from pseudonymized data stored in the data node (that is, a de-pseudonymization process).

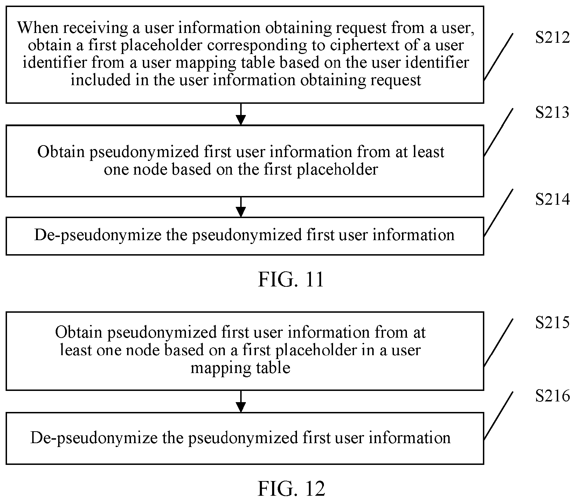

In a possible implementation, FIG. 11 is a schematic flowchart of still another user information processing method according to an embodiment of the present invention. When receiving a user obtaining request from the user, the data center node performs the following steps:
S212. When receiving a user information obtaining request from the user, obtain the first placeholder corresponding to the ciphertext of the user identifier from the user mapping table based on the user identifier included in the user information obtaining request.
S213. Obtain the pseudonymized first user information from the at least one node based on the first placeholder.
S214. De-pseudonymize the pseudonymized first user information.

Step S214 specifically includes:
obtaining the ciphertext of the sensitive data in the correspondence between the second placeholder and the ciphertext of the sensitive data in the user mapping table;
decrypting the ciphertext of the sensitive data by using the first key, to obtain the sensitive data; and
replacing the first placeholder in the pseudonymized user information with the user identifier, and replacing the second placeholder in the pseudonymized user information with the sensitive data.

De-pseudonymization is an inverse process of pseudonymization. During specific implementation, the user identifier included in the obtaining request is encrypted, then the first placeholder corresponding to the ciphertext of the user identifier is obtained from the user mapping table, the pseudonymized user information of the user is retrieved in the data node based on the first placeholder, the ciphertext of the sensitive data is obtained from the mapping table based on the ciphertext of the user identifier or the first placeholder, the sensitive data is decrypted, the first placeholder in the pseudonymized user information is replaced with the user identifier, and the second placeholder in the pseudonymized user information is replaced with the sensitive data, to restore the user information.

In another possible implementation, in scenarios of being authorized to release user information, being authorized to perform marketing by using a short message service message, being authorized to make a notification through an email, and the like, the data center node may actively extract the user information from the data node and analyze the user information. FIG. 12 is a schematic flowchart of still another user information processing method according to an embodiment of the present invention. The method includes the following steps:
S215. Obtain the pseudonymized first user information from the at least one node based on the first placeholder in the user mapping table.
S216. De-pseudonymize the pseudonymized first user information.
S216 specifically includes:
   obtaining the ciphertext of the user identifier in the correspondence between the first placeholder and the ciphertext of the user identifier in the user mapping table and the ciphertext of the sensitive data in the correspondence between the second placeholder and the ciphertext of the sensitive data in the user mapping table;
   decrypting the ciphertext of the user identifier and the ciphertext of the sensitive data by using the first key, to obtain the user identifier and the sensitive data respectively; and
   replacing the first placeholder in the pseudonymized user information with the user identifier, and replacing the second placeholder in the pseudonymized user information with the sensitive data.

A process in which the data center actively de-pseudonymizes the user information is similar to a process in which the user requests de-pseudonymization except that the data center directly retrieves the user information based on the placeholder in the user mapping table.

The following describes the foregoing specific de-pseudonymization process by using a specific example. For example, the data center node is authorized to actively de-pseudonymize the first piece of user information in the user information in Table 5. First, the data center node retrieves and obtains the pseudonymized user information in the data node based on the first placeholder PID 1 in the pseudonymized user information, then, obtains the mobile phone ciphertext PhoneCT 1, the salary ciphertext corresponding to the second placeholder PID 1_1, and the disease ciphertext corresponding to the second placeholder PID1_2 in the correspondence including PID 1, then, obtains the first key from a key management center, decrypts the found mobile phone ciphertext PhoneCT 1, salary ciphertext, and disease ciphertext, to obtain mobile phone number plaintext: Phone 1, salary plaintext information: 3000, and disease plaintext information: gastrosis respectively, then, may further obtain the pseudonymized user information from the data node based on the first placeholder PID 1, replaces the first placeholder in the pseudonymized user information with the user identifier, and replaces the second placeholder in the pseudonymized user information with the sensitive data, to obtain the complete de-pseudonymized user information.

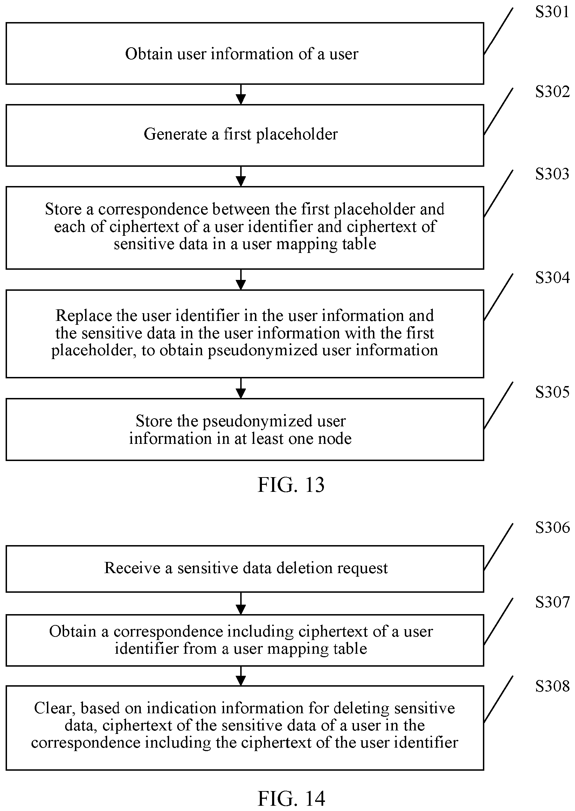

To ensure key security, the key management center may periodically update the key. Specifically, FIG. 13 is a schematic flowchart of still another user information processing method according to an embodiment of the present invention. The method includes the following steps:
S217. Obtain a second key.
S218. Update the user mapping table by using the first key and the second key.

The data center node obtains the updated second key from the key management center, and then updates the user mapping table by using the to-be-updated first key and the second key. It should be noted that all users use a same key, and therefore during key update, ciphertext of all user identifiers and ciphertext of all sensitive data in the user mapping table need to be updated.

Specifically, step S218 may specifically include the following steps:
decrypting ciphertext data in the user mapping table by using the first key, to obtain plaintext data, where the ciphertext data is obtained through encryption using the first key, and includes, for example, the ciphertext of the user identifier and the ciphertext of the sensitive data mentioned in the foregoing embodiments;
encrypting the plaintext data by using the second key, to obtain updated ciphertext data; and
updating the ciphertext data in the user mapping table by using the updated ciphertext data.

During specific implementation, during key update, the user mapping table is obtained first. Tthe ciphertext of all the user identifiers and the ciphertext of the sensitive data in the user mapping table are decrypted one by one using the first key. The ciphertext of all the user identifiers and the ciphertext of the sensitive data are encrypted again using the second key, to obtain updated ciphertext of the user identifiers and updated ciphertext of the sensitive data. The ciphertext of the user identifiers and the ciphertext of the sensitive data in the user mapping table are updated respectively by using the updated ciphertext of the user identifiers and the updated ciphertext of the sensitive data. For example, after the key is updated for the user mapping table in Table 4, a two-column user mapping table obtained after the key is updated is shown in Table 7:

**Table 7 Two-column user mapping table obtained after a key is updated**

| Placeholder | Ciphertext of sensitive information |
|---|---|
| PID 1 | PhoneCT 3 |
| PID 1_1 | SalaryCT 3 |
| PID 1_2 | DiseaseCT 3 |
| PID 2 | PhoneCT 4 |
| PID 2_1 | SalaryCT 4 |
| PID 2_2 | DiseaseCT 4 |
| ... | ... |

It can be learned that during key update, only the ciphertext of the user identifier and the ciphertext of the sensitive data in the user mapping table need to be updated. Because the user identifier and the sensitive data in each data node are respectively replaced with the first placeholder and the second placeholder, the user information in each data node does not need to be processed, thereby dramatically reducing a key update workload.

It should be noted that for the operations: storage of the user information, de-pseudonymization, deletion of the user identifier or the sensitive data, and key update, not all of the operations are necessary, a sequence of all of the operations can be changed, and any one of the operations may be performed as required.

According to the user information processing method provided in this embodiment of the present invention, the correspondence between the first placeholder and the ciphertext of the user identifier and the correspondence between the second placeholder and the ciphertext of the sensitive data are stored in the user mapping table, the user identifier and the sensitive data in the node are pseudonymized, during deletion of the user information, only the correspondence between the first placeholder and the ciphertext of the user identifier needs to be deleted, during deletion of the sensitive data, only the correspondence between the second placeholder and the ciphertext of the sensitive data needs to be deleted, and during key update, only the ciphertext of the user identifier and the ciphertext of the sensitive data in the user mapping table need to be updated, thereby ensuring secure storage and efficient and fine-granularity deletion of the sensitive information of the user, and efficient key update.

In the following embodiments in FIG. 13 to FIG. 16, a case in which a user mapping table includes a plurality of columns used for storage is described.

FIG. 13 is a schematic flowchart of still another user information processing method according to an embodiment of the present invention. The method may include the following steps.

5301. Obtain user information of a user, where the user information includes a user identifier and user data.

This step is the same as step S101 in the embodiment shown in FIG. 2 or step S201 in the embodiment shown in FIG. 3, and therefore details are not described herein again. A difference is that the user information includes the user identifier and user data, and the user data may further include sensitive data and non-sensitive data. For example, in user information in Table 1 that is obtained by a data center node, salary and disease are sensitive data, and home address and position are non-sensitive data. The user identifier and the sensitive data may be collectively referred to as sensitive information.

S302. Generate a first placeholder.

This step is the same as step S102 in the embodiment shown in FIG. 2, and therefore details are not described herein again.

S303. Store a correspondence among the first placeholder ciphertext of the user identifier and ciphertext of the sensitive data in a user mapping table, where the ciphertext of the user identifier is obtained by encrypting the user identifier by using a first key, and the ciphertext corresponding to the sensitive data is obtained by encrypting the sensitive data by using the first key. The user mapping table includes fields: a placeholder field, a user identifier ciphertext field, and a sensitive data ciphertext field. It should be noted that the user mapping table may include a plurality of sensitive data ciphertext fields.

Specifically, in this embodiment, the correspondence among the placeholder, the ciphertext of the user identifier and the ciphertext of the sensitive data is represented in a form of a multi-column user mapping table. For example, a user mapping table generated based on the user information in Table 1 is shown in Table 8:

**Table 8 Multi-column user mapping table**

| Placeholder | Mobile phone number ciphertext | Salary ciphertext | Disease ciphertext |
|---|---|---|---|
| PID 1 | PhoneCT 1 | SalaryCT 1 | DiseaseCT 1 |
| PID 2 | PhoneCT 2 | SalaryCT 2 | DiseaseCT 2 |
| ... | ... | ... | ... |

S304. Replace the user identifier in the user information with the first placeholder, and replace the sensitive data in the user information with the first placeholder, to obtain pseudonymized user information.

When the user information is to be stored in a data node, the user information needs to be pseudonymized, to protect data security. Specifically, the user identifier in the user information is replaced with the first placeholder, and the sensitive data in the user information is replaced with the first placeholder, to obtain the pseudonymized user information. The user information in Table 1 that is shown as an example above is still used as an example. User information obtained by pseudonymizing the user information is shown in Table 9:

**Table 9-1 Pseudonymized user information 1**

| User identifier | Age | Gender | Salary | Disease | Home address | Position |
|---|---|---|---|---|---|---|
| PID 1 | 20 | Female | PID 1 | PID 1 | Beijing | Administrative assistant |
| PID 2 | 28 | Male | PID 2 | PID 2 | Shenzhen | Research and development chief |
| ... | ... | ... | ... | ... | ... | ... |

S305. Store the pseudonymized user information in at least one node.

The pseudonymized user information in Table 9 is stored in one or more data nodes.

Further, the user mapping table is stored in the data center node, and the pseudonymized user information is stored in the data node. In this case, subsequent operations such as deletion of the user information, de-pseudonymization, and key update may be performed as required. The subsequent operations are separately described below.

The user needs to have a right to delete the user information of the user, and deleting the user information includes deleting the entire user information and deleting some sensitive data at a fine granularity. That is, if the user does not expect to delete all the user information of the user, but requires deletion only of a specific piece of sensitive data of the user, for example, a salary and/or a disease, only the sensitive data may be deleted at a fine granularity. The following describes a process of deleting the user information.

In a possible implementation, the entire user information needs to be deleted. For a deletion process, refer to the description of the corresponding part in the foregoing embodiment. Details are not described herein again.

In another possible implementation, the sensitive data is deleted at a fine granularity. FIG. 14 is a schematic flowchart of still another user information processing method according to an embodiment of the present invention. The method may include the following steps:
S306. Receive a sensitive data deletion request, where the sensitive data deletion request includes the user identifier and indication information for deleting the sensitive data.
S307. Obtain the correspondence including the ciphertext of the user identifier from the user mapping table.
S308. Clear, based on the indication information for deleting the sensitive data, the ciphertext of the user sensitive data in the correspondence including the ciphertext of the user identifier.

Specifically, the data center node receives the sensitive data deletion request from the user. The sensitive data deletion request includes the user identifier and indication information for deleting the sensitive data, and the indication information is used to instruct to delete ciphertext of sensitive data of a field. Then, the correspondence including the ciphertext of the user identifier is obtained from the user mapping table. That is, the ciphertext of the sensitive data may be found, and the ciphertext of the sensitive data in the correspondence in the user mapping table is cleared. The ciphertext of the sensitive data is cleared, so that the sensitive data cannot be obtained through decryption, thereby achieving an objective of deleting the sensitive data.

For example, the sensitive data deletion request is received, and the request carries a mobile phone number Phone 1 and an indication for deleting salary data. In this case, Phone 1 is encrypted to obtain PhoneCT 1, a correspondence including PhoneCT 1 is found in the user mapping table shown in Table 8, then a salary ciphertext field is found, and the salary ciphertext field in the correspondence is cleared, and an obtained user mapping table in which the sensitive data is deleted is shown in Table 10:

**Table 10 User mapping table in which a specific piece of sensitive data is cleared**

| Placeholder | Mobile phone number ciphertext | Salary ciphertext | Disease ciphertext |
|---|---|---|---|
| PID 1 | PhoneCT 1 | NULL | DiseaseCT 1 |
| PID 2 | PhoneCT 2 | SalaryCT 2 | DiseaseCT 2 |
| ... | ... | ... | ... |

After the data center node stores the pseudonymized user information in the data node, the data center node may subsequently receive a data query request from the user, that is, the user expects to view the user information of the user. Alternatively, in another scenario, as credited by the user, the data center node may actively extract the user information from the data node and analyze the user information, to help provide a personalized server for the user. In the two cases, data needs to be restored from pseudonymized data stored in the data node (that is, a de-pseudonymization process).

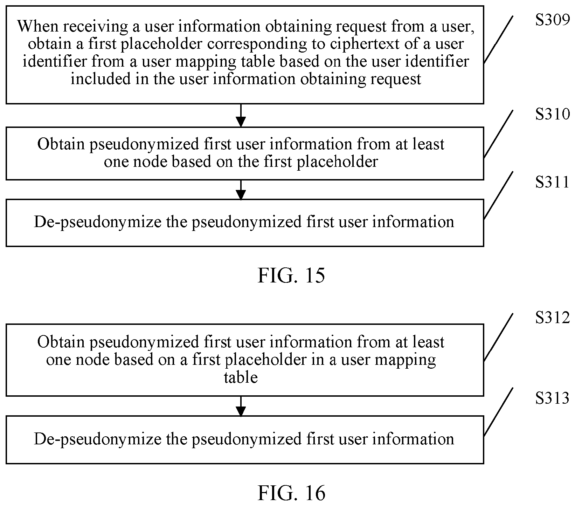

In a possible implementation, FIG. 15 is a schematic flowchart of still another user information processing method according to an embodiment of the present invention. When receiving a user obtaining request from the user, the data center node performs the following steps:
S309. When receiving a user information obtaining request from the user, obtain the first placeholder corresponding to the ciphertext of the user identifier from the user mapping table based on the user identifier included in the user information obtaining request.
5310. Obtain the pseudonymized first user information from the at least one node based on the first placeholder.
S311. De-pseudonymize the pseudonymized first user information.

Step S311 specifically includes:
obtaining the ciphertext of the sensitive data in the correspondence between the first placeholder and the ciphertext of the sensitive data in the user mapping table;
decrypting the ciphertext of the sensitive data by using the first key, to obtain the sensitive data; and
replacing the corresponding first placeholder in the pseudonymized user information with the user identifier and the sensitive data .

In another possible implementation, in scenarios of being authorized to release user information, being authorized to perform marketing by using a short message service message, being authorized to make a notification through an email, and the like, the data center node may actively extract the user information from the data node and analyze the user information. FIG. 16 is a schematic flowchart of still another user information processing method according to an embodiment of the present invention. The method includes the following steps:
S312. Obtain the pseudonymized first user information from the at least one node based on the first placeholder in the user mapping table.
S313. De-pseudonymize the pseudonymized first user information.

Step S313 specifically includes:
obtaining the ciphertext of the user identifier and the ciphertext of the sensitive data in the correspondence between the first placeholder and the ciphertext of the user identifier in the user mapping table;
decrypting the ciphertext of the user identifier and the ciphertext of the sensitive data by using the first key, to obtain the user identifier and the sensitive data respectively; and
replacing the first placeholder in the pseudonymized user information with the user identifier and the sensitive data.

A process in which the data center node actively de-pseudonymizes the user information is similar to a process in which the user requests de-pseudonymization except that the data center node directly retrieves the user information based on the placeholder in the user mapping table.

The following describes the foregoing specific de-pseudonymization process by using a specific example. For example, the data center node is authorized to actively de-pseudonymize the first piece of user information in Table 9. First, the data center node retrieves and obtains the pseudonymized user information in the data node based on the first placeholder PID 1 in the pseudonymized user information, then, obtains the mobile phone ciphertext PhoneCT 1, salary ciphertext, disease ciphertext in the correspondence including PID 1, then, obtains the first key from a key management center, decrypts the found mobile phone ciphertext PhoneCT 1, salary ciphertext, and disease ciphertext, to obtain mobile phone number plaintext: Phone 1, salary plaintext information: 3000, and disease plaintext information: gastrosis respectively, and then, replaces the first placeholder PID 1 in the fields of "user identifier", "salary" and "disease" in the first piece of user information in Table 9 with the user identifier, the salary plaintext information "3000", and the disease plaintext information "gastrosis" respectively. In this replacement process, a field name in Table 9 needs to be associated with a field name in the mapping table. For example, the first placeholder PID 1 in the field of "salary" in Table 9 needs to be replaced with a decryption result of the field of "salary ciphertext" in the mapping table, that is, replaced with salary plaintext. Other fields are processed similarly.

To ensure key security, the key management center may periodically update the key. A key update process is similar to the description of the corresponding part in the foregoing embodiment, and therefore details are not described herein again.

It should be noted that for the operations: storage of the user information, de-pseudonymization, deletion of the user identifier or the sensitive data, and key update, not all of the operations are necessary, a sequence of all of the operations can be changed, and any one of the operations may be performed as required.

According to the user information processing method provided in this embodiment of the present invention, the correspondence between the placeholder and each of the ciphertext of the user identifier and the ciphertext of the sensitive data is stored in the user mapping table, the user identifier and the sensitive data in the node are pseudonymized, during deletion of the user information, only the correspondence between the placeholder and the ciphertext of the user identifier needs to be deleted, during deletion of the sensitive data, only the correspondence between the placeholder and the ciphertext of the sensitive data needs to be deleted, and during key update, only the ciphertext of the user identifier and the ciphertext of the sensitive data in the user mapping table need to be updated, thereby ensuring secure storage and efficient and fine-granularity deletion of the sensitive information of the user, and efficient key update.

In a further implementation, predistribution is performed in a data table based on a field, so that data including a same field value is distributed in a same node. In this case, when different data tables are associated by using the field value, data association needs to be performed only in the node, and no cross-node association is required, thereby improving efficiency of association between different data tables.

There are many predistribution methods. For example, for data in a table, if a modulus result N is obtained after a hash value of a field mod a quantity of data nodes, the data is stored in a node N. Hash values of content of a same field are the same, and therefore nodes to which data is stored are also the same.

In a de-pseudonymization process, to obtain plaintext corresponding to personal data ciphertext in a user data table in a big data node, the user data table needs to be first associated with a mapping table by using a placeholder, to obtain the corresponding personal data ciphertext, and then the ciphertext is decrypted. To implement rapid association, predistribution is performed in the mapping table and the user data table based on a placeholder by using a big data calculation feature.

Similarly, in a pseudonymization process, to obtain a placeholder corresponding to personal data plaintext in a user data table, deterministic encryption is first performed on personal data including a personal identifier, and then the encrypted user data table is associated with a mapping table by using ciphertext of the personal identifier, to obtain the corresponding placeholder. To implement rapid association, predistribution is performed in the mapping table and the encrypted user data table based on the ciphertext of the personal identifier by using a big data calculation feature.

The method according to the embodiments of the present invention is described above in detail, and an apparatus according to the embodiments of the present invention is provided below.

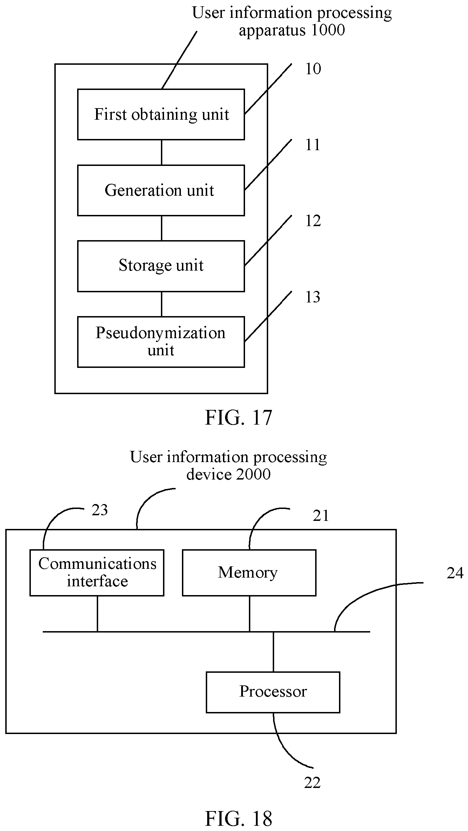

FIG. 17 is a schematic modular diagram of a user information processing apparatus according to an embodiment of the present invention. The apparatus 1000 includes a first obtaining unit 10, a generation unit 11, a storage unit 12, and a pseudonymization unit 13.

The first obtaining unit 10 is configured to obtain first user information of a user, where the first user information includes a user identifier and first user data.

The generation unit 11 is configured to generate a first placeholder.

The storage unit 12 is configured to store a correspondence between the first placeholder and ciphertext of the user identifier in a user mapping table, where the ciphertext of the user identifier is obtained by encrypting the user identifier using a first key.

The pseudonymization unit 13 is configured to pseudonymize the first user information to obtain pseudonymized first user information, where the pseudonymizing the first user information includes replacing the user identifier in the first user information with the first placeholder.

The storage unit 12 is further configured to store the pseudonymized user information in at least one node.

Further, when the user information processing apparatus collects again or re-collects the user information,
the first obtaining unit is further configured to obtain second user information of the user, where the second user information includes the user identifier and second user data;
the user information processing apparatus further includes:
   a first determining unit, configured to determine that the correspondence between the ciphertext of the user identifier and the first placeholder exists in the user mapping table; and
   a second obtaining unit, configured to obtain the first placeholder in the determined correspondence;
   the pseudonymization unit is further configured to pseudonymize the second user information to obtain pseudonymized second user information, where the pseudonymizing the second user information includes replacing the user identifier in the second user information with the first placeholder; and
   the storage unit is further configured to store the pseudonymized second user information in the at least one node.

Further, the following separately describes details (not shown) of modules in cases of a two-column user mapping table and a multi-column user mapping table.

In the case of the two-column user mapping table,
the first user data includes sensitive data;
the generation unit is further configured to generate a second placeholder based on the first placeholder;
the storage unit is further configured to store a correspondence between the second placeholder and ciphertext of the sensitive data in the user mapping table, where the ciphertext of the sensitive data is obtained by encrypting the sensitive data by using the first key; and
the pseudonymization unit is further configured to replace the sensitive data in the user information with the second placeholder.

The generation unit is specifically configured to generate the second placeholder based on the first placeholder and a field attribute corresponding to the ciphertext of the sensitive data.

Further, to ensure key security, a key management center may periodically update the key. Therefore, the user information processing apparatus may further include:
a third obtaining unit, configured to obtain a second key; and
a key update unit, configured to update the user mapping table using the first key and the second key.

The key update unit is specifically configured to:
decrypt ciphertext data in the user mapping table by using the first key, to obtain plaintext data, where the ciphertext data is obtained through encryption the ciphertext data using the first key;
encrypt the plaintext data using the second key, to obtain updated ciphertext data; and
update the ciphertext data in the user mapping table using the updated ciphertext data.

Further, the user needs to have a right to delete the user information of the user. In a possible implementation, the entire user information needs to be deleted, and the user information processing apparatus may further include:
a first receiving unit, configured to receive a user information deletion request, where the user information deletion request includes the user identifier; and
a first destroying unit, configured to destroy the correspondence between the first placeholder and the ciphertext of the user identifier in the user mapping table.

In another possible implementation, the sensitive data is deleted at a fine granularity, and the user information processing apparatus may further include:
a second receiving unit, configured to receive a sensitive data deletion request, where the sensitive data deletion request includes the user identifier and indication information for deleting the sensitive data;
a search unit, configured to search the user mapping table for the first placeholder corresponding to the ciphertext of the user identifier;
a second determining unit, configured to determine the second placeholder based on the first placeholder and the indication information for deleting the sensitive data; and
a second destroying unit, configured to destroy the correspondence between the second placeholder and the ciphertext of the sensitive data in the user mapping table.

The destroying the correspondence includes deleting the correspondence or clearing an item in the correspondence.

Further, after the user information processing apparatus stores the pseudonymized user information in the data node, the user information processing apparatus may subsequently receive a data query request from the user, that is, the user expects to view the user information of the user. Alternatively, in another scenario, as credited by the user, the user information processing apparatus may actively extract the user information from the data node and analyze the user information, to help provide a personalized server for the user. In the two cases, data needs to be restored from pseudonymized data stored in the data node (that is, a de-pseudonymization process).

In another implementation, when the user information processing apparatus actively extracts the user information from the data node and analyzes the user information, the user information processing apparatus may further include:
a fifth obtaining unit, configured to obtain the pseudonymized first user information from the at least one node based on the first placeholder in the user mapping table; and
a first de-pseudonymization unit, configured to de-pseudonymize the pseudonymized first user information, where the first de-pseudonymization unit is specifically configured to:
   obtain the ciphertext of the user identifier in the correspondence between the first placeholder and the ciphertext of the user identifier in the user mapping table and the ciphertext of the sensitive data in the correspondence between the second placeholder and the ciphertext of the sensitive data in the user mapping table;
   decrypt the ciphertext of the user identifier and the ciphertext of the sensitive data by using the first key, to obtain the user identifier and the sensitive data respectively; and
   replace the first placeholder in the pseudonymized user information with the user identifier, and replace the second placeholder in the pseudonymized user information with the sensitive data.

In another implementation, when the user information processing apparatus receives a user information obtaining request from the user, the user information processing apparatus may further include:
a sixth obtaining unit, configured to: when the user information obtaining request from the user is received, obtain the first placeholder corresponding to the ciphertext of the user identifier from the user mapping table based on the user identifier included in the user information obtaining request, where
the sixth obtaining unit is further configured to obtain the pseudonymized first user information from the at least one node based on the first placeholder; and
a second de-pseudonymization unit, configured to de-pseudonymize the pseudonymized first user information, where the second de-pseudonymization unit is specifically configured to:
   obtain the ciphertext of the sensitive data in the correspondence between the second placeholder and the ciphertext of the sensitive data in the user mapping table;
   decrypt the ciphertext of the sensitive data by using the first key, to obtain the sensitive data; and
   replace the first placeholder in the pseudonymized user information with the user identifier, and replace the second placeholder in the pseudonymized user information with the sensitive data.

In the case of the multi-column user mapping table,
the first user data includes sensitive data, and the storage unit is further configured to add ciphertext of the sensitive data to the correspondence between the first placeholder and the ciphertext of the user identifier in the user mapping table, to obtain a correspondence among the first placeholder the ciphertext of the user identifier and the ciphertext of the sensitive data, where
the pseudonymizing the user information further includes: replacing the sensitive data in the user information with the first placeholder.

Further, to ensure key security, a key management center may periodically update the key. Therefore, the user information processing apparatus may further include:
a third obtaining unit, configured to obtain a second key; and
a key update unit, configured to update the user mapping table by using the first key and the second key.

The key update unit is specifically configured to:
decrypt ciphertext data in the user mapping table by using the first key, to obtain plaintext data, where the ciphertext data is obtained through encryption the ciphertext data using the first key;
encrypt the plaintext data by using the second key, to obtain updated ciphertext data; and
update the ciphertext data in the user mapping table by using the updated ciphertext data.

Further, the user needs to have a right to delete the user information of the user. In a possible implementation, the entire user information needs to be deleted, and the user information processing apparatus may further include:
a first receiving unit, configured to receive a user information deletion request, where the user information deletion request includes the user identifier; and
a first destroying unit, configured to destroy the correspondence between the first placeholder and the ciphertext of the user identifier in the user mapping table.

In another possible implementation, the sensitive data is deleted at a fine granularity, and the user information processing apparatus may further include:
a third receiving unit, configured to receive a sensitive data deletion request, where the sensitive data deletion request includes the user identifier and indication information for deleting the sensitive data;
a fourth obtaining unit, configured to obtain the correspondence including the ciphertext of the user identifier from the user mapping table; and
a clearance unit, configured to clear, based on the indication information for deleting the sensitive data, the ciphertext of the sensitive data in the correspondence including the ciphertext of the user identifier.

Further, after the user information processing apparatus stores the pseudonymized user information in the data node, the user information processing apparatus may subsequently receive a data query request from the user, that is, the user expects to view the user information of the user. Alternatively, in another scenario, as credited by the user, the user information processing apparatus may actively extract the user information from the data node and analyze the user information, to help provide a personalized server for the user. In the two cases, data needs to be restored from pseudonymized data stored in the data node (that is, a de-pseudonymization process).

In another implementation, when the user information processing apparatus actively extracts the user information from the data node and analyzes the user information, the user information processing apparatus may further include:
a seventh obtaining unit, configured to obtain the pseudonymized first user information from the at least one node based on the first placeholder in the user mapping table; and
a third de-pseudonymization unit, configured to de-pseudonymize the pseudonymized first user information, where the third de-pseudonymization unit is specifically configured to:
   obtain the ciphertext of the user identifier and the ciphertext of the sensitive data in the correspondence among the first placeholder, the ciphertext of the user identifier and the ciphertext of the sensitive data is in the user mapping table;
   decrypt the ciphertext of the user identifier and the ciphertext of the sensitive data by using the first key, to obtain the user identifier and the sensitive data respectively; and
   replace the corresponding first placeholder in the pseudonymized user information with the user identifier and the sensitive data separately.

In another implementation, when the user information processing apparatus receives a user information obtaining request from the user, the user information processing apparatus may further include:
an eighth obtaining unit, configured to: when the user information obtaining request from the user is received, obtain the first placeholder corresponding to the ciphertext of the user identifier from the user mapping table based on the user identifier included in the user information obtaining request, where
the eighth obtaining unit is further configured to obtain the pseudonymized first user information from the at least one node based on the first placeholder; and
a fourth de-pseudonymization unit, configured to de-pseudonymize the pseudonymized first user information, where the fourth de-pseudonymization unit is specifically configured to:
   obtain the ciphertext of the sensitive data in the correspondence between the first placeholder and the ciphertext of the sensitive data in the user mapping table;
   decrypt the ciphertext of the sensitive data by using the first key, to obtain the sensitive data; and
   replace the corresponding first placeholder in the pseudonymized user information with the user identifier and the sensitive data separately.

For implementation of functions of these units, refer to the description in the foregoing method embodiments. Details are not described herein again.

According to the user information processing apparatus provided in this embodiment of the present invention, the correspondence between the placeholder and the ciphertext of the user identifier is stored in the user mapping table, and the user information in the node is pseudonymized, so that all subsequent operations on the user information can be performed in the user mapping table, and there is no need to perform processing in the node, thereby implementing simpler, more efficient, securer, and more reliable processing of the user information.

FIG. 18 is an architectural diagram of hardware of a user information processing device according to an embodiment of the present invention. The user information processing device 2000 may include a memory 21, a processor 22, and a communications interface 23. The memory 21, the processor 22, and the communications interface 23 are connected to each other by using a bus 24.

The processor 22 is configured to control an operation of the user information processing device 2000, and the processor 22 may also be referred to as a central processing unit (English: central processing unit, CPU for short). In specific application, the various components of the user information processing device 2000 are coupled to each other by using a bus system. In addition to a data bus, the bus system may further include a power bus, a control bus, a status signal bus, and the like. However, for clarity of description, various buses are referred to as the bus system in FIG. 18.

The memory 21 may be a read-only memory (English: read-only memory, ROM for short) or a random access memory (English: random access memory, RAM for short), or may be another memory or a storage medium, and provides an instruction and data for the processor 301. A part of the memory 21 may further include a non-volatile random access memory (English: non-volatile random access memory, NVRAM for short). The memory 21 stores an operating system, an operation instruction, and an executable module or data structure, or a subset or an extension set thereof. The operation instruction may be various operation instructions, and the various operation instructions are used to implement various operations. The operating system may include various system programs used to implement various basic services and process a hardware-based task. The memory 21 further stores data, signaling, and the like used in this embodiment of this application.

The processor 22 may be an integrated circuit chip and has a signal processing capability. In an implementation process of this embodiment of this application, various steps performed by the user information processing device in this embodiment of this application may be completed by an integrated logic circuit of the hardware in the processor 23 or an instruction in a form of software. The processor 23 may be a general purpose processor, a digital signal processor (English: digital signal processor, DSP for short), an application-specific integrated circuit (English: application-specific integrated circuit, ASIC for short), a field programmable gate array (English: field-programmable gate array, FPGA for short) or another programmable logic device, a discrete gate or a transistor logic device, or a discrete hardware component. The processor may implement or perform the various methods, steps, and logical block diagrams disclosed in the embodiments of this application. The general purpose processor may be a microprocessor, or the processor may be any conventional processor or the like. The steps of the methods disclosed with reference to the embodiments of this application may be directly performed and completed by a hardware decoding processor, or may be performed and completed by using a combination of hardware in a decoding processor and a software module. The software module may be located in a mature storage medium in the art, such as a random access memory, a flash memory, a read-only memory, a programmable read-only memory, an electrically erasable programmable memory, or a register.

The communications interface 23 may be configured to receive or send information/data, for example, configured to: receive user information and the like fed back by a terminal device, and generate a signal related to function control, to process the user information.

The processor 22 runs the program in the memory, to perform the following operations:
obtaining first user information of a user, where the first user information includes a user identifier and first user data;
generating a first placeholder;
storing a correspondence between the first placeholder and ciphertext of the user identifier in a user mapping table, where the ciphertext of the user identifier is obtained by encrypting the user identifier by using a first key;
pseudonymizing the first user information to obtain pseudonymized first user information, where the pseudonymizing the user information includes replacing the user identifier in the first user information with the first placeholder; and
storing the pseudonymized first user information in at least one node.

In a possible implementation, the processor 22 is further configured to perform the following operations:
obtaining second user information of the user, where the second user information includes the user identifier and second user data;
determining that the correspondence between the ciphertext of the user identifier and the first placeholder exists in the user mapping table;
obtaining the first placeholder in the determined correspondence;
pseudonymizing the second user information to obtain pseudonymized second user information, where the pseudonymizing the second user information includes replacing the user identifier in the second user information with the first placeholder; and
storing the pseudonymized second user information in the at least one node.

In another possible implementation, the first user data includes sensitive data, and the processor 22 is further configured to perform the following operations:
generating a second placeholder based on the first placeholder; and storing a correspondence between the second placeholder and ciphertext of the sensitive data in the user mapping table, where the ciphertext of the sensitive data is obtained by encrypting the sensitive data by using the first key, where
the pseudonymizing the user information further includes: replacing the sensitive data in the user information with the second placeholder.

In still another possible implementation, the generating a second placeholder based on the first placeholder includes:
generating the second placeholder based on the first placeholder and a field attribute corresponding to the ciphertext of the sensitive data.

In still another possible implementation, the first user data includes sensitive data, and the processor 22 is further configured to perform the following operations:
adding ciphertext of the sensitive data to the correspondence between the first placeholder and the ciphertext of the user identifier and that is in the user mapping table, to obtain a correspondence among the first placeholder the ciphertext of the user identifier and the ciphertext of the sensitive data, where
the pseudonymizing the user information further includes: replacing the sensitive data in the user information with the first placeholder.

In still another possible implementation, the first placeholder is globally unique.

In still another possible implementation, the processor 22 is further configured to perform the following operations:
obtaining a second key; and
updating the user mapping table using the first key and the second key.

In still another possible implementation, that the processor 22 performs the operation of updating the user mapping table by using the first key and the second key includes:
decrypting ciphertext data in the user mapping table by using the first key, to obtain plaintext data, where the ciphertext data is obtained through encryption the ciphertext data using the first key;
encrypting the plaintext data by using the second key, to obtain updated ciphertext data; and
updating the ciphertext data in the user mapping table by using the updated ciphertext data.

In still another possible implementation, the processor 22 is further configured to perform the following operations:
receiving a user information deletion request, where the user information deletion request includes the user identifier; and
destroying the correspondence between the first placeholder and the ciphertext of the user identifier in the user mapping table.

In still another possible implementation, the processor 22 is further configured to perform the following operations:
receiving a sensitive data deletion request, where the sensitive data deletion request includes the user identifier and indication information for deleting the sensitive data;
searching the user mapping table for the first placeholder corresponding to the ciphertext of the user identifier;
determining the second placeholder based on the first placeholder and the indication information for deleting the sensitive data; and
destroying the correspondence between the second placeholder and the ciphertext of the sensitive data in the user mapping table.

In still another possible implementation, the destroying the correspondence includes deleting the correspondence or clearing an item in the correspondence.

In still another possible implementation, the processor 22 is further configured to perform the following operations:
receiving a sensitive data deletion request, where the sensitive data deletion request includes the user identifier and indication information for deleting the sensitive data;
obtaining the correspondence including the ciphertext of the user identifier from the user mapping table; and
clearing, based on the indication information for deleting the sensitive data, the ciphertext of the sensitive data in the correspondence including the ciphertext of the user identifier.

In still another possible implementation, the processor 22 is further configured to perform the following operations:
obtaining the pseudonymized first user information from the at least one node based on the first placeholder in the user mapping table; and
de-pseudonymizing the pseudonymized first user information, where the de-pseudonymizing the pseudonymized first user information includes:
   obtaining the ciphertext of the user identifier in the correspondence between the first placeholder and the ciphertext of the user identifier in the user mapping table and the ciphertext of the sensitive data in the correspondence between the second placeholder and the ciphertext of the sensitive data in the user mapping table;
   decrypting the ciphertext of the user identifier and the ciphertext of the sensitive data by using the first key, to obtain the user identifier and the sensitive data respectively; and
   replacing the first placeholder in the pseudonymized user information with the user identifier, and replacing the second placeholder in the pseudonymized user information with the sensitive data.

In still another possible implementation, the processor 22 is further configured to perform the following operations:
when receiving a user information obtaining request from the user, obtaining the first placeholder corresponding to the ciphertext of the user identifier from the user mapping table based on the user identifier included in the user information obtaining request;
obtaining the pseudonymized first user information from the at least one node based on the first placeholder; and
de-pseudonymizing the pseudonymized first user information, where the de-pseudonymizing the pseudonymized first user information includes:
   obtaining the ciphertext of the sensitive data in the correspondence between the second placeholder and the ciphertext of the sensitive data in the user mapping table;
   decrypting the ciphertext of the sensitive data by using the first key, to obtain the sensitive data; and
   replacing the first placeholder in the pseudonymized user information with the user identifier, and replacing the second placeholder in the pseudonymized user information with the sensitive data.

In still another possible implementation, the processor 22 is further configured to perform the following operations: after storing the pseudonymized user information in the at least one node:
obtaining the pseudonymized first user information from the at least one node based on the first placeholder in the user mapping table; and
de-pseudonymizing the pseudonymized first user information, where the de-pseudonymizing the pseudonymized first user information includes:
   obtaining the ciphertext of the user identifier and the ciphertext of the sensitive data in the correspondence between the first placeholder and the ciphertext of the user identifier in the user mapping table;
   decrypting the ciphertext of the user identifier and the ciphertext of the sensitive data by using the first key, to obtain the user identifier and the sensitive data respectively; and
   replacing the corresponding first placeholder in the pseudonymized user information with the user identifier and the sensitive data.

In still another possible implementation, the processor 22 is further configured to perform the following operations:
when receiving a user information obtaining request from the user, obtaining the first placeholder corresponding to the ciphertext of the user identifier from the user mapping table based on the user identifier included in the user information obtaining request;
obtaining the pseudonymized first user information from the at least one node based on the first placeholder; and
de-pseudonymizing the pseudonymized first user information, where the de-pseudonymizing the pseudonymized first user information includes:
   obtaining the ciphertext of the sensitive data in the correspondence between the first placeholder and the ciphertext of the sensitive data in the user mapping table;
   decrypting the ciphertext of the sensitive data by using the first key, to obtain the sensitive data; and
   replacing the corresponding first placeholder in the pseudonymized user information with the user identifier and the sensitive data.

For details, refer to the description in the foregoing method embodiments. Details are not described herein again.

It may be understood that FIG. 18 merely shows a simplified design of the user information processing device. In actual application, the user information processing device may further include other necessary elements, including but not limited to any quantity of transceivers, processors, controllers, and memories. All terminal devices that can implement the present invention fall within the protection scope of the present invention.

According to the user information processing device provided in this embodiment of the present invention, the correspondence between the placeholder and the ciphertext of the user identifier is stored in the user mapping table, and the user information in the node is pseudonymized, so that all subsequent operations on the user information can be performed in the user mapping table, and there is no need to perform processing in the node, thereby implementing simpler, more efficient, securer, and more reliable processing of the user information.

According to still another aspect of this application, a user information processing system is provided. The system includes a terminal device, the user information processing apparatus described in the foregoing implementations, and at least one data node.

According to still another aspect of this application, a computer readable storage medium is provided. The computer readable storage medium stores an instruction, and when the instruction is run on a computer, the computer is enabled to perform the method according to the foregoing aspects.

According to still another aspect of this application, a computer program product including an instruction is provided, and when the computer program product is run on a computer, the computer is enabled to perform the method according to the foregoing aspects.

A person of ordinary skill in the art may be aware that units and algorithm steps in the examples described with reference to the embodiments disclosed in this specification may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that for the purpose of convenient and brief description, for a detailed working process of the foregoing system, apparatus, and unit, refer to the corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, the unit division is merely logical function division and may be other division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatuses or units may be implemented in an electronic form, a mechanical form, or another form.

The units described as separate parts may or may not be physically separate, and parts displayed as units may or may not be physical units, may be located in one position, or may be distributed in a plurality of network units. Some or all of the units may be selected based on an actual requirement to achieve the objectives of the solutions of the embodiments.

In addition, function units in the embodiments of this application may be integrated into one processing unit, or each of the units may exist alone physically, or two or more units are integrated into one unit.

All or some of the foregoing embodiments may be implemented by software, hardware, firmware, or any combination thereof. When software is used to implement the embodiments, some or all of the embodiments may be implemented in a form of a computer program product. The computer program product includes one or more computer instructions. When the computer program instructions are loaded and executed on a computer, some or all of the procedures or functions according to the embodiments of the present invention are generated. The computer may be a general purpose computer, a dedicated computer, a computer network, or another programmable apparatus. The computer instructions may be stored in a computer readable storage medium, or may be transmitted by using the computer readable storage medium. The computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (Solid State Disk, SSD)), or the like.

A person of ordinary skill in the art may understand that all or some of the procedures of the methods in the embodiments may be implemented by a computer program instructing related hardware. The program may be stored in a computer readable storage medium. When the program runs, the procedures of the methods in the embodiments may be performed. The storage medium includes any medium that can store program code, such as a ROM or a random access memory RAM, a magnetic disk, or a compact disc.

## Claims

1. A user information processing method, wherein the method comprises:
obtaining (101) first user information of a user, wherein the first user information comprises a user identifier and first user data;
generating (102) a first placeholder, wherein the first placeholder is a globally unique random number or a globally unique random string;
storing (103) in a user mapping table a correspondence between a ciphertext of the user identifier and the globally unique random number or the globally unique random string,
wherein the ciphertext of the user identifier is obtained by encrypting the user identifier using a first key;
pseudonymizing (104) the first user information to obtain pseudonymized first user information, wherein the pseudonymizing the first user information comprises replacing the user identifier in the first user information with the globally unique random number or the globally unique random string; and
storing (105) the pseudonymized first user information in at least one node.

2. The method according to claim 1, wherein the method further comprises:
obtaining (116) second user information of the user, wherein the second user information comprises the user identifier and second user data;
determining (117) that the correspondence between the ciphertext of the user identifier and the globally unique random number or the globally unique random string exists in the user mapping table;
obtaining (118) the globally unique random number or the globally unique random string in the determined correspondence;
pseudonymizing (119) the second user information to obtain pseudonymized second user information, wherein the pseudonymizing the second user information comprises replacing the user identifier in the second user information with the globally unique random number or the globally unique random string; and
storing (120) the pseudonymized second user information in the at least one node.

3. The method according to claim 1, wherein the first user data comprises sensitive data, and the method further comprises:
generating a second placeholder based on the globally unique random number or the globally unique random string, and storing a correspondence between the second placeholder and ciphertext of the sensitive data in the user mapping table, wherein the ciphertext of the sensitive data is obtained by encrypting the sensitive data using the first key, wherein
the pseudonymizing the user information further comprises: replacing the sensitive data in the user information with the second placeholder.

4. The method according to claim 1, wherein the first user data comprises sensitive data, and the method further comprises:
adding a ciphertext of the sensitive data to the correspondence between the globally unique random number or the globally unique random string and the ciphertext of the user identifier in the user mapping table, to obtain a correspondence among the globally unique random number or the globally unique random string, the ciphertext of the user identifier, and the ciphertext of the sensitive data, wherein
the pseudonymizing the user information further comprises: replacing the sensitive data in the first user information with the globally unique random number or the globally unique random string.

5. The method according to any one of claims 1 to 4, wherein the method further comprises:
obtaining (114) a second key; and
decrypting ciphertext data in the user mapping table using the first key, to obtain plaintext data, wherein the ciphertext data is obtained through encryption of the plaintext data using the first key;
encrypting the plaintext data using the second key, to obtain updated ciphertext data; and
updating the ciphertext data in the user mapping table by using the updated ciphertext data.

6. The method according to any one of claims 1 to 5, wherein the method further comprises:
receiving (106) a user information deletion request, wherein the user information deletion request comprises the user identifier; and
destroying (107) the correspondence between the globally unique random number or the globally unique random string and the ciphertext of the user identifier in the user mapping table.

7. The method according to claim 3, wherein the method further comprises:
receiving (208) a sensitive data deletion request, wherein the sensitive data deletion request comprises the user identifier and indication information for deleting the sensitive data;
searching (209) the user mapping table for the globally unique random number or globally unique random string corresponding to the ciphertext of the user identifier;
determining (210) the second placeholder based on the globally unique random number or the globally unique random string, and the indication information for deleting the sensitive data; and
destroying (211) the correspondence between the second placeholder and the ciphertext of the sensitive data in the user mapping table.

8. The method according to claim 4, wherein after the storing the pseudonymized user information in at least one node, the method further comprises:
receiving (306) a sensitive data deletion request, wherein the sensitive data deletion request comprises the user identifier and indication information for deleting the sensitive data;
obtaining (307) the correspondence comprising the ciphertext of the user identifier from the user mapping table; and
clearing (308), based on the indication information for deleting the sensitive data, the ciphertext of the sensitive data in the correspondence comprising the ciphertext of the user identifier.

9. A user information processing apparatus, comprising:
a first obtaining unit (10), configured to obtain first user information of a user, wherein the first user information comprises a user identifier and first user data;
a generation unit (11), configured to generate a first placeholder, wherein the first placeholder is a globally unique random number or a globally unique random string;
a storage unit (12), configured to store in a user mapping table a correspondence between a ciphertext of the user identifier and the globally unique random number or the globally unique random string, wherein the ciphertext of the user identifier is obtained by encrypting the user identifier using a first key; and
a pseudonymization unit (13), configured to pseudonymize the first user information to obtain pseudonymized first user information, wherein the pseudonymizing the first user information comprises replacing the user identifier in the user information with the globally unique random number or the globally unique random string, wherein
the storage unit (12) is further configured to store the pseudonymized first user information in at least one node.

10. The user information processing apparatus according to claim 9, wherein
the first obtaining unit (10) is further configured to obtain second user information of the user, wherein the second user information comprises the user identifier and second user data;
the user information processing apparatus further comprises:
a first determining unit, configured to determine that the correspondence between the ciphertext of the user identifier and the globally unique random number, or the correspondence between the ciphertext of the user identifier and the globally unique random string exists in the user mapping table; and
a second obtaining unit, configured to obtain the globally unique random number or the globally unique random string in the determined correspondence;
the pseudonymization unit is further configured to pseudonymize the second user information to obtain pseudonymized second user information, wherein the pseudonymizing the second user information comprises replacing the user identifier in the second user information with the globally unique random number or the globally unique random string; and
the storage unit (12) is further configured to store the pseudonymized second user information in the at least one node.

11. The user information processing apparatus according to claim 9, wherein the first user data comprises sensitive data;
the generation unit (11) is further configured to generate a second placeholder based on the globally unique random number or the globally unique random string;
the storage unit (12) is further configured to store a correspondence between the second placeholder and ciphertext of the sensitive data in the user mapping table, wherein the ciphertext of the sensitive data is obtained by encrypting the sensitive data using the first key; and
the pseudonymization unit (13) is further configured to replace the sensitive data in the user information with the second placeholder.

12. The user information processing apparatus according to claim 11, wherein the generation unit (11) is specifically configured to generate the second placeholder based on the globally unique random number or the globally unique random string and a field attribute corresponding to the ciphertext of the sensitive data.

13. The user information processing apparatus according to claim 9, wherein the first user data comprises sensitive data, and the storage unit (12) is further configured to add a ciphertext of the sensitive data to the correspondence between the globally unique random number or the globally unique random string and the ciphertext of the user identifier in the user mapping table, to obtain a correspondence among the globally unique random number or the globally unique random string string, the ciphertext of the user identifier, and the ciphertext of the sensitive data, wherein
the pseudonymization unit (13) is further configured to replace the sensitive data in the user information with the globally unique random number or the globally unique random string.

14. The user information processing apparatus according to any one of claims 9 to 13, further comprising:
a third obtaining unit, configured to obtain a second key; and
a key update unit, configured to:
decrypt ciphertext data in the user mapping table by using the first key, to obtain plaintext data, wherein the ciphertext data is obtained through encryption of the ciphertext data using the first key;
encrypt the plaintext data using the second key, to obtain updated ciphertext data; and
update the ciphertext data in the user mapping table by using the updated ciphertext data.

15. The user information processing apparatus according to any one of claims 9 to 14, further comprising:
a first receiving unit, configured to receive a user information deletion request, wherein the user information deletion request comprises the user identifier; and
a first destroying unit, configured to destroy the correspondence between the globally unique random number and the ciphertext of the user identifier, or a correspondence between the globally unique random string and ciphertext of the user identifier in the user mapping table.

## Patentansprüche

1. Benutzerinformationsverarbeitungsverfahren, wobei das Verfahren Folgendes umfasst:
Erlangen (101) erster Benutzerinformationen eines Benutzers, wobei die ersten Benutzerinformationen eine Benutzerkennung und erste Benutzerdaten umfassen;
Erzeugen (102) eines ersten Platzhalters, wobei der erste Platzhalter eine allgemein eindeutige Zufallszahl oder eine allgemein eindeutige Zufallsfolge ist;
Speichern (103), in einer Benutzerzuordnungstabelle, einer Übereinstimmung zwischen einem Chiffretext der Benutzerkennung und der allgemein eindeutigen Zufallszahl oder der allgemein eindeutigen Zufallsfolge,
wobei der Chiffretext der Benutzerkennung durch Verschlüsseln der Benutzerkennung unter Verwendung eines ersten Schlüssels erlangt wird;
Pseudonymisieren (104) der ersten Benutzerinformationen, um pseudonymisierte erste Benutzerinformationen zu erlangen, wobei das Pseudonymisieren der ersten Benutzerinformationen Ersetzen der Benutzerkennung in den ersten Benutzerinformationen durch die allgemein eindeutige Zufallszahl oder die allgemein eindeutige Zufallsfolge umfasst; und
Speichern (105) der pseudonymisierten ersten Benutzerinformationen in mindestens einem Knoten.

2. Verfahren nach Anspruch 1, wobei das Verfahren ferner Folgendes umfasst:
Erlangen (116) zweiter Benutzerinformationen des Benutzers, wobei die zweiten Benutzerinformationen die Benutzerkennung und zweite Benutzerdaten umfassen;
Bestimmen (117), dass die Übereinstimmung zwischen dem Chiffretext der Benutzerkennung und der allgemein eindeutigen Zufallszahl oder der allgemein eindeutigen Zufallsfolge in der Benutzerzuordnungstabelle existiert;
Erlangen (118) der allgemein eindeutigen Zufallszahl oder der allgemein eindeutigen Zufallsfolge in der bestimmten Übereinstimmung;
Pseudonymisieren (119) der zweiten Benutzerinformationen, um pseudonymisierte zweite Benutzerinformationen zu erlangen, wobei das Pseudonymisieren der zweiten Benutzerinformationen Ersetzen der Benutzerkennung in den zweiten Benutzerinformationen durch die allgemein eindeutige Zufallszahl oder die allgemein eindeutige Zufallsfolge umfasst; und
Speichern (120) der pseudonymisierten zweiten Benutzerinformationen in dem mindestens einen Knoten.

3. Verfahren nach Anspruch 1, wobei die ersten Benutzerdaten empfindliche Daten umfassen und das Verfahren ferner Folgendes umfasst:
Erzeugen eines zweiten Platzhalters basierend auf der allgemein eindeutigen Zufallszahl oder der allgemein eindeutigen Zufallsfolge und Speichern einer Übereinstimmung zwischen dem zweiten Platzhalter und Chiffretext der empfindlichen Daten in der Benutzerzuordnungstabelle, wobei der Chiffretext der empfindlichen Daten durch Verschlüsseln der empfindlichen Daten unter Verwendung des ersten Schlüssels erlangt wird, wobei
das Pseudonymisieren der Benutzerinformationen ferner Folgendes umfasst: Ersetzen der empfindlichen Daten in den Benutzerinformationen durch den zweiten Platzhalter.

4. Verfahren nach Anspruch 1, wobei die ersten Benutzerdaten empfindliche Daten umfassen und das Verfahren ferner Folgendes umfasst:
Hinzufügen eines Chiffretexts der empfindlichen Daten zu der Übereinstimmung zwischen der allgemein eindeutigen Zufallszahl oder der allgemein eindeutigen Zufallsfolge und dem Chiffretext der Benutzerkennung in der Benutzerzuordnungstabelle, um eine Übereinstimmung zwischen der allgemein eindeutigen Zufallszahl oder der allgemein eindeutigen Zufallsfolge, dem Chiffretext der Benutzerkennung und dem Chiffretext der empfindlichen Daten zu erlangen, wobei
das Pseudonymisieren der Benutzerinformationen ferner Folgendes umfasst: Ersetzen der empfindlichen Daten in den ersten Benutzerinformationen durch die allgemein eindeutige Zufallszahl oder die allgemein eindeutige Zufallsfolge.

5. Verfahren nach einem der Ansprüche 1 bis 4, wobei das Verfahren ferner Folgendes umfasst:
Erlangen (114) eines zweiten Schlüssels; und
Entschlüsseln von Chiffretextdaten in der Benutzerzuordnungstabelle unter Verwendung des ersten Schlüssels, um Klartextdaten zu erlangen, wobei die Chiffretextdaten durch Verschlüsselung der Klartextdaten unter Verwendung des ersten Schlüssels erlangt werden;
Verschlüsseln der Klartextdaten unter Verwendung des zweiten Schlüssels, um aktualisierte Chiffretextdaten zu erlangen; und
Aktualisieren der Chiffretextdaten in der Benutzerzuordnungstabelle unter Verwendung der aktualisierten Chiffretextdaten.

6. Verfahren nach einem der Ansprüche 1 bis 5, wobei das Verfahren ferner Folgendes umfasst:
Empfangen (106) einer Benutzerinformationslöschanforderung, wobei die Benutzerinformationslöschanforderung die Benutzerkennung umfasst; und
Vernichten (107) der Übereinstimmung zwischen der allgemein eindeutigen Zufallszahl oder der allgemein eindeutigen Zufallsfolge und dem Chiffretext der Benutzerkennung in der Benutzerzuordnungstabelle.

7. Verfahren nach Anspruch 3, wobei das Verfahren ferner Folgendes umfasst:
Empfangen (208) einer Löschanforderung empfindlicher Daten, wobei die Löschanforderung empfindlicher Daten die Benutzerkennung und Angabeinformationen zum Löschen der empfindlichen Daten umfasst;
Durchsuchen (209) der Benutzerzuordnungstabelle nach der allgemein eindeutigen Zufallszahl oder der allgemein eindeutigen Zufallsfolge, die dem Chiffretext der Benutzerkennung entspricht;
Bestimmen (210) des zweiten Platzhalters basierend auf der allgemein eindeutigen Zufallszahl oder der allgemein eindeutigen Zufallsfolge und den Angabeinformationen zum Löschen der empfindlichen Daten; und
Vernichten (211) der Übereinstimmung zwischen dem zweiten Platzhalter und dem Chiffretext der empfindlichen Daten in der Benutzerzuordnungstabelle.

8. Verfahren nach Anspruch 4, wobei das Verfahren nach dem Speichern der pseudonymisierten Benutzerinformationen in mindestens einem Knoten ferner Folgendes umfasst:
Empfangen (306) einer Löschanforderung empfindlicher Daten, wobei die Löschanforderung empfindlicher Daten die Benutzerkennung und Angabeinformationen zum Löschen der empfindlichen Daten umfasst;
Erlangen (307) der Übereinstimmung, die den Chiffretext der Benutzerkennung aus der Benutzerzuordnungstabelle umfasst; und
Tilgen (308), basierend auf den Angabeinformationen zum Löschen der empfindlichen Daten, des Chiffretexts der empfindlichen Daten in der Übereinstimmung, die den Chiffretext der Benutzerkennung umfasst.

9. Benutzerinformationsverarbeitungsvorrichtung, umfassend:
eine erste Erlangungseinheit (10), die dazu konfiguriert ist, erste Benutzerinformationen eines Benutzers zu erlangen, wobei die ersten Benutzerinformationen eine Benutzerkennung und erste Benutzerdaten umfassen;
eine Erzeugungseinheit (11), die dazu konfiguriert ist, einen ersten Platzhalter zu erzeugen, wobei der erste Platzhalter eine allgemein eindeutige Zufallszahl oder eine allgemein eindeutige Zufallsfolge ist;
eine Speichereinheit (12), die dazu konfiguriert ist, in einer Benutzerzuordnungstabelle eine Übereinstimmung zwischen einem Chiffretext der Benutzerkennung und der allgemein eindeutigen Zufallszahl oder der allgemein eindeutigen Zufallsfolge zu speichern,
wobei der Chiffretext der Benutzerkennung durch Verschlüsseln der Benutzerkennung unter Verwendung eines ersten Schlüssels erlangt wird; und
eine Pseudonymisierungseinheit (13), die dazu konfiguriert ist, die ersten Benutzerinformationen zu pseudonymisieren, um pseudonymisierte erste Benutzerinformationen zu erlangen, wobei das Pseudonymisieren der ersten Benutzerinformationen Ersetzen der Benutzerkennung in den Benutzerinformationen durch die allgemein eindeutige Zufallszahl oder die allgemein eindeutige Zufallsfolge umfasst, wobei
die Speichereinheit (12) ferner dazu konfiguriert ist, die pseudonymisierten ersten Benutzerinformationen in mindestens einem Knoten zu speichern.

10. Benutzerinformationsverarbeitungsvorrichtung nach Anspruch 9, wobei
die erste Erlangungseinheit (10) ferner dazu konfiguriert ist, zweite Benutzerinformationen des Benutzers zu erlangen, wobei die zweiten Benutzerinformationen die Benutzerkennung und zweite Benutzerdaten umfassen;
die Benutzerinformationsverarbeitungsvorrichtung ferner Folgendes umfasst:
eine erste Bestimmungseinheit, die dazu konfiguriert ist, zu bestimmen, dass die Übereinstimmung zwischen dem Chiffretext der Benutzerkennung und der allgemein eindeutigen Zufallszahl oder die Übereinstimmung zwischen dem Chiffretext der Benutzerkennung und der allgemein eindeutigen Zufallsfolge in der Benutzerzuordnungstabelle existiert; und
eine zweite Erlangungseinheit, die dazu konfiguriert ist, die allgemein eindeutige Zufallszahl oder die allgemein eindeutige Zufallsfolge in der bestimmten Übereinstimmung zu erlangen;
die Pseudonymisierungseinheit ferner dazu konfiguriert ist, die zweiten Benutzerinformationen zu pseudonymisieren, um pseudonymisierte zweite Benutzerinformationen zu erlangen, wobei das Pseudonymisieren der zweiten Benutzerinformationen Ersetzen der Benutzerkennung in den zweiten Benutzerinformationen durch die allgemein eindeutige Zufallszahl oder die allgemein eindeutige Zufallsfolge umfasst; und
die Speichereinheit (12) ferner dazu konfiguriert ist, die pseudonymisierten zweiten Benutzerinformationen in dem mindestens einen Knoten zu speichern.

11. Benutzerinformationsverarbeitungsvorrichtung nach Anspruch 9, wobei die ersten Benutzerdaten empfindliche Daten umfassen;
die Erzeugungseinheit (11) ferner dazu konfiguriert ist, einen zweiten Platzhalter basierend auf der allgemein eindeutigen Zufallszahl oder der allgemein eindeutigen Zufallsfolge zu erzeugen;
die Speichereinheit (12) ferner dazu konfiguriert ist, eine Übereinstimmung zwischen dem zweiten Platzhalter und Chiffretext der empfindlichen Daten in der Benutzerzuordnungstabelle zu speichern, wobei der Chiffretext der empfindlichen Daten durch Verschlüsseln der empfindlichen Daten unter Verwendung des ersten Schlüssels erlangt wird; und
die Pseudonymisierungseinheit (13) ferner dazu konfiguriert ist, die empfindlichen Daten in den Benutzerinformationen durch den zweiten Platzhalter zu ersetzen.

12. Benutzerinformationsverarbeitungsvorrichtung nach Anspruch 11, wobei die Erzeugungseinheit (11) spezifisch dazu konfiguriert ist, den zweiten Platzhalter basierend auf der allgemein eindeutigen Zufallszahl oder der allgemein eindeutigen Zufallsfolge und einem Feldattribut, das dem Chiffretext der empfindlichen Daten entspricht, zu erzeugen.

13. Benutzerinformationsverarbeitungsvorrichtung nach Anspruch 9, wobei die ersten Benutzerdaten empfindliche Daten umfassen und die Speichereinheit (12) ferner dazu konfiguriert ist, einen Chiffretext der empfindlichen Daten zu der Übereinstimmung zwischen der allgemein eindeutigen Zufallszahl oder der allgemein eindeutigen Zufallsfolge und dem Chiffretext der Benutzerkennung in der Benutzerzuordnungstabelle hinzuzufügen, um eine Übereinstimmung zwischen der allgemein eindeutigen Zufallszahl oder der allgemein eindeutigen Zufallsfolge, dem Chiffretext der Benutzerkennung und dem Chiffretext der empfindlichen Daten zu erlangen,
wobei die Pseudonymisierungseinheit (13) ferner dazu konfiguriert ist, die empfindlichen Daten in den Benutzerinformationen durch die allgemein eindeutige Zufallszahl oder die allgemein eindeutige Zufallsfolge zu ersetzen.

14. Benutzerinformationsverarbeitungsvorrichtung nach einem der Ansprüche 9 bis 13, ferner umfassend:
eine dritte Erlangungseinheit, die dazu konfiguriert ist, einen zweiten Schlüssel zu erlangen; und
eine Schlüsselaktualisierungseinheit, die zu Folgendem konfiguriert ist:
Entschlüsseln von Chiffretextdaten in der Benutzerzuordnungstabelle unter Verwendung des ersten Schlüssels, um Klartextdaten zu erlangen, wobei die Chiffretextdaten durch Verschlüsselung der Chiffretextdaten unter Verwendung des ersten Schlüssels erlangt werden;
Verschlüsseln der Klartextdaten unter Verwendung des zweiten Schlüssels, um aktualisierte Chiffretextdaten zu erlangen; und
Aktualisieren der Chiffretextdaten in der Benutzerzuordnungstabelle unter Verwendung der aktualisierten Chiffretextdaten.

15. Benutzerinformationsverarbeitungsvorrichtung nach einem der Ansprüche 9 bis 14, ferner umfassend:
eine erste Empfangseinheit, die dazu konfiguriert ist, eine Benutzerinformationslöschanforderung zu empfangen, wobei die Benutzerinformationslöschanforderung die Benutzerkennung umfasst; und
eine erste Vernichtungseinheit, die dazu konfiguriert ist, die Übereinstimmung zwischen der allgemein eindeutigen Zufallszahl und dem Chiffretext der Benutzerkennung oder eine Übereinstimmung zwischen der allgemein eindeutigen Zufallsfolge und Chiffretext der Benutzerkennung in der Benutzerzuordnungstabelle zu vernichten.

## Revendications

1. Procédé de traitement d'informations d'utilisateur, dans lequel le procédé comprend :
l'obtention (101) de premières informations d'utilisateur d'un utilisateur, dans lequel les premières informations d'utilisateur comprennent un identifiant d'utilisateur et des premières données d'utilisateur ;
la génération (102) d'un premier espace réservé, dans lequel le premier espace réservé est un nombre aléatoire globalement unique ou une chaîne aléatoire globalement unique ;
le stockage (103) dans une table de mappage d'utilisateur d'une correspondance entre un texte chiffré de l'identifiant d'utilisateur et le nombre aléatoire globalement unique ou la chaîne aléatoire globalement unique,
dans lequel le texte chiffré de l'identifiant d'utilisateur est obtenu par chiffrement de l'identifiant d'utilisateur à l'aide d'une première clé ;
la pseudonymisation (104) des premières informations d'utilisateur pour obtenir des premières informations d'utilisateur pseudonymisées, dans lequel la pseudonymisation des premières informations d'utilisateur comprend le remplacement de l'identifiant d'utilisateur dans les premières informations d'utilisateur par le nombre aléatoire globalement unique ou la chaîne aléatoire globalement unique ; et
le stockage (105) des premières informations d'utilisateur pseudonymisées dans au moins un noeud.

2. Procédé selon la revendication 1, dans lequel le procédé comprend également :
l'obtention (116) de secondes informations d'utilisateur de l'utilisateur, dans lequel les secondes informations d'utilisateur comprennent l'identifiant d'utilisateur et des secondes données d'utilisateur ;
la détermination (117) que la correspondance entre le texte chiffré de l'identifiant d'utilisateur et le nombre aléatoire globalement unique ou la chaîne aléatoire globalement unique existe dans la table de mappage d'utilisateur ;
l'obtention (118) du nombre aléatoire globalement unique ou de la chaîne aléatoire globalement unique dans la correspondance déterminée ;
la pseudonymisation (119) des secondes informations d'utilisateur pour obtenir des secondes informations d'utilisateur pseudonymisées, dans lequel la pseudonymisation des secondes informations d'utilisateur comprend le remplacement de l'identifiant d'utilisateur dans les secondes informations d'utilisateur par le nombre aléatoire globalement unique ou la chaîne aléatoire globalement unique ; et
le stockage (120) des secondes informations d'utilisateur pseudonymisées dans l'au moins un noeud.

3. Procédé selon la revendication 1, dans lequel les premières données d'utilisateur comprennent des données sensibles, et le procédé comprend également :
la génération d'un second espace réservé en fonction du nombre aléatoire globalement unique ou de la chaîne aléatoire globalement unique, et le stockage d'une correspondance entre le second espace réservé et le texte chiffré des données sensibles dans la table de mappage d'utilisateur, dans lequel le texte chiffré des données sensibles est obtenu par chiffrement des données sensibles à l'aide de la première clé, dans lequel
la pseudonymisation des informations d'utilisateur comprend également : le remplacement des données sensibles dans les informations d'utilisateur par le second espace réservé.

4. Procédé selon la revendication 1, dans lequel les premières données d'utilisateur comprennent des données sensibles, et le procédé comprend également :
l'ajout d'un texte chiffré des données sensibles à la correspondance entre le numéro aléatoire globalement unique ou la chaîne aléatoire globalement unique et le texte chiffré de l'identifiant d'utilisateur dans la table de mappage d'utilisateur, pour obtenir une correspondance entre le numéro aléatoire globalement unique ou la chaîne aléatoire globalement unique, le texte chiffré de l'identifiant d'utilisateur et le texte chiffré des données sensibles, dans lequel
la pseudonymisation des informations d'utilisateur comprend également : le remplacement des données sensibles dans les premières informations d'utilisateur par le nombre aléatoire globalement unique ou la chaîne aléatoire globalement unique.

5. Procédé selon l'une quelconque des revendications 1 à 4, dans lequel le procédé comprend également :
l'obtention (114) d'une seconde clé ; et
le déchiffrement des données chiffrées dans la table de mappage d'utilisateur à l'aide de la première clé, pour obtenir des données en clair, dans lequel les données chiffrées sont obtenues par chiffrement des données en clair à l'aide de la première clé ;
le chiffrement des données en clair à l'aide de la seconde clé, pour obtenir des données chiffrées mises à jour ; et
la mise à jour des données chiffrées dans la table de mappage d'utilisateur à l'aide des données chiffrées mises à jour.

6. Procédé selon l'une quelconque des revendications 1 à 5, dans lequel le procédé comprend également :
la réception (106) d'une demande de suppression d'informations d'utilisateur, dans lequel la demande de suppression d'informations d'utilisateur comprend l'identifiant d'utilisateur ; et
la destruction (107) de la correspondance entre le nombre aléatoire globalement unique ou la chaîne aléatoire globalement unique et du texte chiffré de l'identifiant d'utilisateur dans la table de mappage d'utilisateur.

7. Procédé selon la revendication 3, dans lequel le procédé comprend également :
la réception (208) d'une demande de suppression de données sensibles, dans lequel la demande de suppression de données sensibles comprend l'identifiant d'utilisateur et des informations d'indication pour supprimer les données sensibles ;
la recherche (209) dans la table de mappage d'utilisateur du nombre aléatoire globalement unique ou de la chaîne aléatoire globalement unique correspondant au texte chiffré de l'identifiant d'utilisateur ;
la détermination (210) du second espace réservé en fonction du nombre aléatoire globalement unique ou de la chaîne aléatoire globalement unique, et des informations d'indication pour supprimer les données sensibles ; et
la destruction (211) de la correspondance entre le second espace réservé et le texte chiffré des données sensibles dans la table de mappage d'utilisateur.

8. Procédé selon la revendication 4, dans lequel après le stockage des informations d'utilisateur pseudonymisées dans au moins un noeud, le procédé comprend également :
la réception (306) d'une demande de suppression de données sensibles, dans lequel la demande de suppression de données sensibles comprend l'identifiant d'utilisateur et des informations d'indication pour supprimer les données sensibles ;
l'obtention (307) de la correspondance comprenant le texte chiffré de l'identifiant d'utilisateur à partir de la table de mappage d'utilisateur ; et
l'effacement (308), en fonction des informations d'indication pour supprimer les données sensibles, du texte chiffré des données sensibles dans la correspondance comprenant le texte chiffré de l'identifiant d'utilisateur.

9. Appareil de traitement d'informations d'utilisateur, comprenant :
une première unité d'obtention (10), configurée pour obtenir des premières informations d'utilisateur d'un utilisateur, dans lequel les premières informations d'utilisateur comprennent un identifiant d'utilisateur et de premières données d'utilisateur ;
une unité de génération (11), configurée pour générer un premier espace réservé, dans lequel le premier espace réservé est un nombre aléatoire globalement unique ou une chaîne aléatoire globalement unique ;
une unité de stockage (12), configurée pour stocker dans une table de mappage d'utilisateur une correspondance entre un texte chiffré de l'identifiant d'utilisateur et le nombre aléatoire globalement unique ou la chaîne aléatoire globalement unique,
dans lequel le texte chiffré de l'identifiant d'utilisateur est obtenu par chiffrement de l'identifiant d'utilisateur à l'aide d'une première clé ; et
une unité de pseudonymisation (13), configurée pour pseudonymiser les premières informations d'utilisateur afin d'obtenir des premières informations d'utilisateur pseudonymisées, dans lequel la pseudonymisation des premières informations d'utilisateur comprend le remplacement de l'identifiant d'utilisateur dans les informations d'utilisateur par le nombre aléatoire globalement unique ou la chaîne aléatoire globalement unique, dans lequel l'unité de stockage (12) est également configurée pour stocker les premières informations d'utilisateur pseudonymisées dans au moins un noeud.

10. Appareil de traitement d'informations d'utilisateur selon la revendication 9, dans lequel
la première unité d'obtention (10) est également configurée pour obtenir des secondes informations d'utilisateur de l'utilisateur, dans lequel les secondes informations d'utilisateur comprennent l'identifiant d'utilisateur et des secondes données d'utilisateur ;
l'appareil de traitement d'informations d'utilisateur comprend également :
une première unité de détermination, configurée pour déterminer que la correspondance entre le texte chiffré de l'identifiant d'utilisateur et le nombre aléatoire globalement unique, ou la correspondance entre le texte chiffré de l'identifiant d'utilisateur et la chaîne aléatoire globalement unique existe dans la table de mappage d'utilisateur ; et
une deuxième unité d'obtention, configurée pour obtenir le nombre aléatoire globalement unique ou la chaîne aléatoire globalement unique dans la correspondance déterminée ;
l'unité de pseudonymisation est également configurée pour pseudonymiser les secondes informations d'utilisateur pour obtenir des secondes informations d'utilisateur pseudonymisées, dans lequel la pseudonymisation des secondes informations d'utilisateur comprend le remplacement de l'identifiant d'utilisateur dans les secondes informations d'utilisateur par le nombre aléatoire globalement unique ou la chaîne aléatoire globalement unique ; et
l'unité de stockage (12) est également configurée pour stocker les secondes informations d'utilisateur pseudonymisées dans l'au moins un noeud.

11. Appareil de traitement d'informations d'utilisateur selon la revendication 9, dans lequel les premières données d'utilisateur comprennent des données sensibles ;
l'unité de génération (11) est également configurée pour générer un second espace réservé en fonction du nombre aléatoire globalement unique ou de la chaîne aléatoire globalement unique ; l'unité de stockage (12) est également configurée pour stocker une correspondance entre le second espace réservé et le texte chiffré des données sensibles dans la table de mappage d'utilisateur, dans lequel le texte chiffré des données sensibles est obtenu par chiffrement des données sensibles à l'aide de la première clé ; et
l'unité de pseudonymisation (13) est également configurée pour remplacer les données sensibles dans les informations d'utilisateur par le second espace réservé.

12. Appareil de traitement d'informations d'utilisateur selon la revendication 11, dans lequel l'unité de génération (11) est spécifiquement configurée pour générer le second espace réservé en fonction du nombre aléatoire globalement unique ou de la chaîne aléatoire globalement unique et d'un attribut de champ correspondant au texte chiffré des données sensibles.

13. Appareil de traitement d'informations d'utilisateur selon la revendication 9, dans lequel les premières données d'utilisateur comprennent des données sensibles, et l'unité de stockage (12) est également configurée pour ajouter un texte chiffré des données sensibles à la correspondance entre le nombre aléatoire globalement unique ou la chaîne aléatoire globalement unique et le texte chiffré de l'identifiant d'utilisateur dans la table de mappage d'utilisateur, afin d'obtenir une correspondance entre le nombre aléatoire globalement unique ou la chaîne aléatoire globalement unique, le texte chiffré de l'identifiant d'utilisateur, et le texte chiffré des données sensibles,
dans lequel l'unité de pseudonymisation (13) est également configurée pour remplacer les données sensibles dans les informations d'utilisateur par le nombre aléatoire globalement unique ou la chaîne aléatoire globalement unique.

14. Appareil de traitement d'informations d'utilisateur selon l'une quelconque des revendications 9 à 13, comprenant également :
une troisième unité d'obtention, configurée pour obtenir une seconde clé ; et
une unité de mise à jour de clé, configurée pour :
déchiffrer des données chiffrées dans la table de mappage d'utilisateur à l'aide de la première clé, pour obtenir des données en clair, dans lequel les données chiffrées sont obtenues par chiffrement des données chiffrées à l'aide de la première clé ;
chiffrer des données en clair à l'aide de la seconde clé, pour obtenir des données chiffrées mises à jour ; et
mettre à jour des données chiffrées dans la table de mappage d'utilisateur à l'aide des données chiffrées mises à jour.

15. Appareil de traitement d'informations d'utilisateur selon l'une quelconque des revendications 9 à 14, comprenant également :
une première unité de réception, configurée pour recevoir une demande de suppression d'informations d'utilisateur, dans lequel la demande de suppression d'informations d'utilisateur comprend l'identifiant d'utilisateur ; et
une première unité de destruction, configurée pour détruire la correspondance entre le numéro aléatoire globalement unique et le texte chiffré de l'identifiant d'utilisateur, ou une correspondance entre la chaîne aléatoire globalement unique et le texte chiffré de l'identifiant d'utilisateur dans la table de mappage d'utilisateur.
